(19) Europäisches Patentamt
European Patent Office
Office européen des brevets

(11) EP 1 432 308 B1

(12) **EUROPÄISCHE PATENTSCHRIFT**

(45) Veröffentlichungstag und Bekanntmachung des Hinweises auf die Patenterteilung:
**12.12.2007 Patentblatt 2007/50**

(21) Anmeldenummer: **02800095.8**

(22) Anmeldetag: **19.09.2002**

(51) Int Cl.:
***A01N 25/10*** *(2006.01)* ***A01N 25/12*** *(2006.01)*
***A01N 37/50*** *(2006.01)*

(86) Internationale Anmeldenummer:
**PCT/EP2002/010499**

(87) Internationale Veröffentlichungsnummer:
**WO 2003/028453 (10.04.2003 Gazette 2003/15)**

(54) **BIOLOGISCH ABBAUBARE FESTE ZUBEREITUNG EINES PFLANZENSCHUTZMITTELS MIT VERZÖGERTER WIRKSTOFFREISETZUNG**

BIODEGRADABLE SOLID PREPARATION OF A PHYTOPATHOLOGICAL AGENT WITH DELAYED ACTIVE-SUBSTANCE RELEASE

PREPARATION SOLIDE BIODEGRADABLE CON UE POUR UN PRODUIT PHYTOPHARMACEUTIQUE A LIBERATION DE SUBSTANCE RETARDEE

(84) Benannte Vertragsstaaten:
**AT BE BG CH CY CZ DE DK EE ES FI FR GB GR IE IT LI LU MC NL PT SE SK TR**

(30) Priorität: **28.09.2001 DE 10148052**

(43) Veröffentlichungstag der Anmeldung:
**30.06.2004 Patentblatt 2004/27**

(73) Patentinhaber: **BASF Aktiengesellschaft**
**67056 Ludwigshafen (DE)**

(72) Erfinder:
- **DIEING, Reinhold**
  **67346 Speyer (DE)**
- **DIETSCHE, Frank**
  **69198 Schriesheim (DE)**
- **GOMEZ, Marcos**
  **69117 Heidelberg (DE)**
- **KESSLER, Thomas**
  **67105 Schifferstadt (DE)**
- **SCHILLO, Simone**
  **67059 Ludwigshafen (DE)**
- **SCHNEIDER, Karl-Heinrich**
  **67271 Kleinkarlbach (DE)**
- **HEILMANN, Karl-Otto**
  **67304 Eisenberg (DE)**

(56) Entgegenhaltungen:
**EP-A- 0 381 290** **EP-A- 0 763 510**
**WO-A-98/19531** **WO-A-99/00013**
**WO-A-99/56540** **DE-A- 4 432 126**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein Verfahren zur Herstellung einer feste Zubereitung eines Pflanzenschutzmittels mit verzögerter Wirkstofffreisetzung, dadurch gekennzeichnet, dass man eine Schmelzextrusion einer Zusammensetzung enthaltend

(a) 0,1-80 Gew.-% mindestens eines fungiziden Wirkstoffes;

(b) 0-80 Gew.-% mindestens eines herbiziden, acariziden oder insektiziden oder wachstumsregulierenden Wirkstoffes;

(c) 3-80 Gew.-% eines thermoplatischen, wasserunlöslichen Polymers aus der Gruppe der Polylactide;

(d) 0-80 Gew.-% mindestens eines thermoplastischen Polymers;

(e) 10-80 Gew.-% mindestens eines mineralischen Füllstoffs; und

(f) 0-20 Gew.-% anorganische oder organische Additive;

wobei die Summe der Komponenten (a) bis (f) sich zu 100 % ergibt, mit anschließender Formgebung durchführt. Die über das erfindungsgemäße Verfahren herstellbaren Formulierungen sind ebenfalls Gegenstand der vorliegenden Erfindung.

Die durch das erfindungsgemäße Verfahren herstellbaren Formulierungen sind dadurch gekennzeichnet, daß sie den oder die enthaltenden Wirkstoffe (a) und (b) kontrolliert und langsam (vollständige Freisetzung in mehreren Tagen bis zu einigen Monaten) in die Umgebung (Boden, wässriges Medium, Pflanzen) freisetzen. Formulierungen, die die enthaltenden Wirkstoffe kontrolliert und langsam freisetzen, werden allgemein als "slow-release"-Formulierungen bezeichnet.

Durch die kontrollierte Freisetzung wird eine dem jeweiligen Anwendungszweck entsprechend gewünschte Bioverfügbarkeit über einen längeren Zeitraum realisiert. Dies ist beispielsweise erforderlich für in Boden und/oder Pflanze unzureichend persistente Wirkstoffe, für die Kulturpflanze phytotoxische Wirkstoffe oder auch für Anwendungen bei denen eine Wirkstoffverfügbarkeit bzw. Freisetzung über einen längeren Zeitraum erforderlich ist.

Weiterer Gegenstand der Erfindung ist somit ein Verfahren zur Bekämpfung von phytopathogenen Pilzen in dem man eine erfindungsgemäß hergestellte Formulierung in fester Form auf Pflanzen, deren Lebensraum oder auf Saatgut einwirken läßt. Je nachchem, ob ein oder mehrere Wirkstoffe der Gruppe (b) verwendet werden, ist das oben genannte Verfahren auch zur Bekämpfung unerwünschtem Pflanzenwuchses, unerwünschtem Insekten- oder Milbenbefalls und/oder zur Regulation des Wachstums von Pflanzen geeignet.

Die Herstellung von slow release Formulierungen, enthaltend ein oder mehrere pestizide Wirkstoffe, mindestens einen mineralischen Füllstoff, anorganische oder organische Additive sowie mindestens eines thermoplastischen, wasserunlöslichen Polymers mittels Schmelzextrusion ist bekannt (WO 99/56540).

Die nach dem in WO 99/56540 beschriebenen Verfahren hergestellten Granulate können bezüglich thermoplastischer Verarbeitbarkeit und Homogenität in der Praxis nicht immer befriedigen. Zum anderen ist die Freisetzungsrate des Wirkstoffes aus dieser Formulierung nicht regulierbar.

Die Aufgabe der vorliegenden Erfindung besteht darin, ein Verfahren zur Herstellung von biologisch abbaubaren slow release Formulierungen von Pflanzenschutzwirkstoffen zu entwickeln, wobei

- die hergestellte Formulierung granulierbar, fest, lagerstabil und in Wasser sedimentierbar ist;
- die Freisetzungsrate des pestiziden Wirkstoffes bzw. der pestiziden Wirkstoffe der hergestellten slow release Formulierungen regulierbar ist.

Überraschender Weise wurde gefunden, dass durch den Zusatz von Polylactid die oben beschriebenen Nachteile vermieden werden können. Somit wurde die erfindungsgemäße Aufgabe gelöst durch die Schmelzextrusion einer Mischung enthaltend

(a) 0,1-80 Gew.-% mindestens eines fungiziden Wirkstoffes;

(b) 0-80 Gew.-% mindestens eines herbiziden, acariziden oder insektiziden Wirkstoffes;

(c) 3-80 Gew.-% eines thermoplastischen, wasserunlöslichen Polymers aus der Gruppe der Polylactide;

(d) 0-80 Gew.-% mindestens eines thermoplastischen Polymers;

(e) 10-80 Gew.-% mindestens eines mineralischen Füllstoffs; und

(f) 0-20 Gew.-% anorganische oder organische Additive.

Die Freisetzungsrate der hergestellten Formulierung ist durch den Anteil des zugesetzten Polylactides (c) gezielt regulierbar.

Unter "wasserunlöslich" ist zu verstehen, dass die polymeren Bindemittel (c) eine Wasserlöslichkeit von weniger als 100 mg pro Liter Wasser bei 20°C aufweisen.

Thermoplatische, wasserunlösliche Polymeren aus der Gruppe der Polylactide (c) basieren auf Polykondensationsprodukten der Milchsäure sind in WO 97/41836, WO 96/18591, WO 94/05484, US 5,310,865, US 5,428,126, US 5,440,008, US 5,142,023, US 5,247,058, US 5,247,059 und US 5,484,881 beschrieben. Auch zu nennen sind in diesem Zusammenhang Polylactid-Copolymere, die in WO 98/09613, US 4,045,418, US 4,057,537, Adv. Mater. 2000, 12, 1841-1846 beschrieben sind. Sie sind für die erfindungsgemäßen Formulierungen geeignet.

Kommerziell erhältlich sind Polylactide von der Firma Cargill Dow LLC (z.B. PLA Polymer 404ID, PLA Polymer 4040D, PLA Polymer 4031D, PLA Polymer 2000D oder PLA Polymer 1100) oder von der Firma Mitsui Chemicals (Lactea).

Bei diesen Produkten handelt es sich um Polymere auf Basis Lactidsäure-Lactone (A), die durch Ringöffnungspolymerisation in Polylactidsäure-Polymere (B) überführt werden:

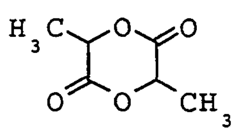 (A)

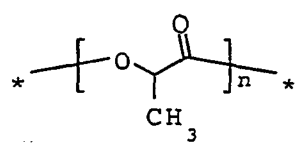 (B)

Der Polymerisationsgrad n in Formel (B) liegt im Bereich von 1000 bis 4000, bevorzugt von 1500 bis 3500 und besonders bevorzugt von 1500 bis 2000. Diese Polymere sind als Komponente (c) in den erfindungsgemäßen Formulierungen besonders bevorzugt. Die durchschnittlichen Molmassen dieser Produkte liegen entsprechend dem Polymerisationsgrad von 71.000 bis 284.000 g/mol. Besonders bevorzugte Polymere der Formel (B) haben durchschnittliche Molmassen von 118.000 g/mol (Lactea), 212.000 g/mol (PLA Polymer 4041D), bzw. 223.000 g/mol (PLA Polymer 2000D).

Der Anteil des thermoplastischen, wasserunlöslichen Polymers aus der Gruppe der Polylactide (c) in der Gesamtzubereitung kann je nach Wirksamkeit, Freisetzungsgeschwindigkeit und Verarbeitbarkeit variieren. Im allgemeinen liegt der Anteil im Bereich von 3-80 Gew.-%, bevorzugt im Bereich von 3-50 Gew.-% und besonders bevorzugt im Bereich von 5-30 Gew.-% bezogen auf die gesamte Zubereitung. Bedingung hierbei ist, daß die Zubereitung noch thermoplastisch verarbeitbar ist.

Wirkstoff (a) ist mindestens ein Wirkstoff ausgewählt aus der Klasse der Fungizide. Somit sind auch Kombinationen mehrerer Wirkstoffe aus der Klasse der Fungizide erfindungsgemäß. Hierbei kommen die folgenden Fungizide in Betracht:

Schwefel, Dithiocarbamate und deren Derivate, wie Ferridimethyldithiocarbamat, Zinkdimethyldithiocarbamat, Zinkethylenbisdithiocarbamat, Manganethylenbisdithiocarbamat, Mangan-Zink-ethylendiamin-bis-dithiocarbamat, Tetramethylthiuramdisulfide, Ammoniak-Komplex von Zink-(N,N-ethylen-bis-dithiocarbamat), Ammoniak-Komplex von Zink-(N,N'-propylen-bis-dithiocarbamat), Zink-(N,N'-propylenbis-dithiocarbamat), N,N'-Polypropylen-bis-(thiocarbamoyl)disulfid;

Nitroderivate, wie Dinitro-(1-methylheptyl)-phenylcrotonat, 2-sec-Butyl-4,6-dinitrophenyl-3,3-dimethylacrylat, 2-sec-Butyl-4,6-dinitrophenyl-isopropylcarbonat, 5-Nitro-isophthalsäuredi-isopropylester;

heterocyclische Substanzen, wie 2-Heptadecyl-2-imidazolin-acetat, 2,4-Dichlor-6-(o-chloranilino)-s-triazin, O,O-Diethyl-phthalimidophosphonothioat, 5-Amino-1-[bis-(dimethylamino)-phosphinyl]-3-phenyl-1,2,4- triazol, 2,3-Dicyano-1,4-dithioanthrachinon, 2-Thio-1,3-dithiolo[4,5-b]chinoxalin, 1-(Butylcarbamoyl)-2-benzimidazol-carbaminsäuremethylester, 2-Methoxycarbonylamino-benzimidazol, 2-(Furyl-(2))-benzimidazol, 2-(Thiazolyl-(4))-benzimidazol, N-(1,1,2,2-Tetrachlorethylthio)-tetrahydrophthalimid, N-Trichlormethylthio-tetrahydrophthalimid, N-Trichlormethylthiophthalimid, N-Dichlorfluormethylthio-N',N'-dimethyl-N-phenylschwefelsäure-diamid, 5-Ethoxy-3-triclilormethyl-1,2,3-thiadiazol, 2-Rhodanmethylthiobenzthiazol, 1,4-Dichlor-2,5-dimethoxybenzol, 4-(2-Chlorphenylhydrazono)-3-methyl-5-isoxazolon, Pyridin-2-thio-1-oxid, 8-Hydroxychinolin bzw. dessen Kupfersalz, 2,3-Dihydro-5-carboxanilido-6-methyl-1,4-oxathiin, 2,3-Dihydro-5-carboxanilido-6-methyl-1,4-oxathiin-4,4-dioxid, 2-Methyl-5,6-dihydro-4H-pyran-3-carbonsäure-anilid, 2-Methyl-furan-3-carbonsäureanilid, 2,5-Dimethyl-furan-3-carbonsäureanilid, 2,4,5-Trimethyl-furan-3-carbonsäureanilid, 2,5-Dimethyl-furan-3-carbonsäurecyclohexylamid, N-Cyclohexyl-N-methoxy-2,5-dimethyl-furan-3-carbonsäureamid, 2-Methyl-benzoesäure-anilid, 2-Iodbenzoesäure-anilid, N-Formyl-N-morpholin-2,2,2-trichlorethylacetal, Piperazin-1,4-diylbis-1-(2,2,2-trichlorethyl)-formamid, 1-(3,4-Dichloranilino)-1-formylamino-2,2,2-trichlorethan, 2,6-Dimethyl-N-tridecyl-morpholin bzw. dessen Salze, 2,6-Dimethyl-N-cyclododecyl-morpholin bzw. dessen Salze, N-[3-(p-tert.-Butylphenyl)-2-methylpropyl]-cis-2,6-dimethyl-morpholin, N-[3-(p-tert.-Butylphenyl)-2-methylpropyl]-piperidin, 1-[2-(2,4-Dichlorphenyl)-4-ethyl-1,3-dioxolan-2-yl-ethyl]-1H-1,2,4-triazol, 1-[2-(2,4-Dichlorphenyl)-4-n-propyl-1,3-dioxolan-2-yl-ethyl]-1H-1,2,4-triazol, N-(n-Propyl)-N-(2,4,6-trichlorphenoxyethyl)-N'-imidazol-yl-harnstoff, 1-(4-Chlorphenoxy)-3,3-dimethyl-1-(1H-1,2,4-triazol-1-yl)-2-butanon, 1-(4-Chlorphenoxy)-3,3-dimethyl-1-(1H-1,2,4-triazol-1-yl)-2-butanol, (2RS,3RS)-1-[3-(2-Chlorphenyl)-2-(4-fluorphenyl)-oxiran-2-yl-methyl]-1H-1,2,4-triazol, α-(2-Chlorphenyl)-α-(4-chlorphenyl)-5-pyrimidin-methanol, 5-Butyl-2-dimethylamino-4-hydroxy-6-methylpyrimidin, Bis-(p-chlorphenyl)-3-pyridinmethanol, 1,2-Bis-(3-ethoxycarbonyl-2-thioureido)-benzol, 1,2-Bis-(3-methoxycarbonyl-2-thioureido)-benzol,

Anilinopyrimidine wie N-(4,6-Dimethylpyrimidin-2-yl)-anilin, N-[4-Methyl-6-(1-propinyl)-pyrimidin-2-yl]-anilin, N-[4-Methyl-6-cyclopropyl-pyrimidin-2-yl]-anilin,

Phenylpyrrole wie 4-(2,2-Difluor-1,3-benzodioxol-4-yl)-pyrrol-3-carbonitril,

Zimtsäureamide wie 3-(4-Chlorphenyl)-3-(3,4-dimethoxyphenyl)-acrylsäuremorpholid,

sowie verschiedene Fungizide, wie Dodecylguanidinacetat, 3-[3-(3,5-Dimethyl-2-oxycyclohexyl)-2-hydroxyethyl]-glutarimid, Hexachlorbenzol, DL-Methyl-N-(2,6-dimethyl-phenyl)-N-furoyl(2)-alaninat, DL-N-(2,6-Dimethyl-phenyl)-N-(2'-methoxyacetyl)-alanin-methyl-ester, N-(2,6-Dimethylphenyl)-N-chloracetyl-D,L-2-aminobutyrolacton, DL-N-(2,6-Dimethylphenyl)-N-(phenylacetyl)-alaninmethylester, 5-Methyl-5-vinyl-3-(3,5-dichlorphenyl)-2,4-dioxo-1,3-oxazolidin, 3-(3,5-Dichlorphenyl)-5-methyl-5-methoxymethyl-1,3-oxazolidin- 2,4-dion, 3-(3,5-Dichlorphenyl)-1-isopropylcarbamoylhydantoin, N-(3,5-Dichlorphenyl)-1,2-dimethylcyclopropan-1,2-dicarbonsäureimid, 2-Cyano-[N-(ethylaminocarbonyl)-2-methoximino]-acetamid, 1-[2-(2,4-Dichlorphenyl)-pentyl]-1H-1,2,4-triazol, 2,4-Difluor-α-(1H-1,2,4-triazolyl-1-methyl)-benzhydrylalkohol, N-(3-Chlor-2,6-dinitro-4-trifluormethyl-phenyl)-5-trifluormethyl-3-chlor-2-aminopyridin, 1-((bis-(4-Fluorphenyl)-methylsilyl)-methyl)-1H-1,2,4-triazol, 5-Chlor-2-cyano-4-p-tolyl-imidazol-1-sulfonsäuredimethylamid, 3,5-Dichlor-N-(3-chlor-1-ethyl-1-methyl-2-oxo-propyl)-4-methylbenzamid, carpropamid, 3-(2-propyloxy)-1,2-benzisothiazole-1,1-dioxide (probenazol), furamethpyr, diclometh, iprobenfos, Iprodione, Pyroquilon Tricyclazol, Isoprothiolane, Edifenphos, Ferimzone, Fludioxinil, Pencycuron, Flutolanil, Mepronil, Thifluzamid, Iprodione, Furametpyr,

Strobilurine der Formel I:

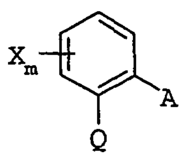

I

worin

X Halogen, $C_1$-$C_4$-Alkyl oder Trifluormethyl;

m 0 oder 1;

Q $C(=CH-CH_3)-COOCH_3$, $C(=CH-OCH_3)-COOCH_3$, $C(=N-OCH_3)-CONHCH_3$, $C(=N-OCH_3)-COOCH_3$ oder $N(-OCH_3)-COOCH_3$;

A -O-B, $-CH_2O-B$, $-OCH_2-B$, -CH=CH-B, -C≡C-B, $-CH_2O-N=C(R^1)-B$ oder $-CH_2O-N=C(R^1)-C(R^2)=N-OR^3$, wobei B Phenyl, Naphthyl, 5-gliedriges oder 6-gliedriges Hetaryl oder 5-gliedriges oder 6-gliedriges Heterocyclyl, enthaltend ein bis drei N-Atome und/oder ein O- oder S-Atom oder ein oder zwei O- und/oder S- Atome, wobei die Ringsysteme unsubstituiert oder substituiert sind durch einen bis drei Reste $R^a$:

$R^a$ Cyano, Nitro, Amino, Aminocarbonyl, Aminothiocarbonyl, Halogen, $C_1$-$C_6$-Alkyl, $C_1$-$C_6$-Halogenalkyl, $C_1$-$C_6$-Alkylcarbonyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkyloxycarbonyl, $C_1$-$C_6$-Alkylthio, $C_1$-$C_6$-Alkylamino, Di-$C_1$-$C_6$-Alkylamino, $C_1$-$C_6$-Alkylaminocarbonyl, Di-$C_1$-$C_6$-Alkylaminocarbonyl, $C_1$-$C_6$-Alkylaminothiocarbonyl, Di-$C_1$-$C_6$-Alkylaminothiocarbonyl, $C_2$-$C_6$-Alkenyl, $C_2$-$C_6$-Alkenyloxy, Phenyl, Phenoxy, Benzyl, Benzyloxy, 5- oder 6-gliedriges Heterocyclyl, 5- oder 6-gliedriges Hetaryl, 5- oder 6-gliedriges Hetaryloxy, $C(R^{\alpha})=NOR^{\beta}$ oder $OC(R^{\alpha})_2-C(R^{\beta})=NOR^{\beta}$,

wobei die cyclischen Reste ihrerseits unsubstituiert oder substituiert sind durch einen bis drei Reste $R^b$:

$R^b$ Cyano, Nitro, Halogen, Amino, Aminocarbonyl, Aminothiocarbonyl, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylaminocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy, $C_3$-$C_6$-Cycloalkyl, $C_3$-$C_6$-Cycloalkenyl, Phenyl, Phenoxy, Phenylthio, Benzyl, Benzyloxy, 5- oder 6-gliedriges Heterocyclyl, 5- oder 6-gliedriges Hetaryl, 5- oder 6-gliedriges Hetaryloxy oder $C(R^{\alpha})=NOR^{\beta}$;

$R^{\alpha}$,$R^{\beta}$ Wasserstoff oder $C_1$-$C_6$-Alkyl;

$R^1$ Wasserstoff, Cyano, $C_1$-$C_4$-Alkyl, $C_1$-$C_4$-Halogenalkyl, $C_3$-$C_6$-Cycloalkyl, $C_1$-$C_4$-Alkoxy;

$R^2$ Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste $R^a$;

$C_1$-$C_{10}$-Alkyl, $C_3$-$C_6$-Cycloalkyl, $C_2$-$C_{10}$-Alkenyl, $C_2$-$C_{10}$-Alkinyl, $C_1$-$C_{10}$-Alkylcarbonyl, $C_2$-$C_{10}$-Alkenylcarbonyl, $C_3$-$C_{10}$-Alkinylcarbonyl, $C_1$-$C_{10}$-Alkylsulfonyl, oder $C(R^{\alpha})=NOR^{\beta}$, wobei die Kohlenwasserstoffreste dieser Gruppen unsubstituiert oder substituiert sind durch einen bis drei Reste $R^c$:

$R^c$ Cyano, Nitro, Amino, Aminocarbonyl, Aminothiocarbonyl, Halogen, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_1$-$C_6$-Alkoxy, $C_1$-$C_6$-Halogenalkoxy, $C_1$-$C_6$-Alkoxycarbonyl, $C_1$-$C_6$-Alkylthio, $C_1$-$C_6$-Alkylamino,Di-$C_1$-$C_6$-alkylamino,$C_1$-$C_6$-Alkylaminocarbonyl,Di-$C_1$-$C_6$-alkylaminocarbonyl.,$C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy,

$C_3$-$C_6$-Cycloalkyl, $C_3$-$C_6$-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste $R^a$ tragen können; und

$R^3$ Wasserstoff,

$C_1$-$C_6$-Alkyl, $C_2$-$C_6$-Alkenyl, $C_2$-$C_6$-Alkinyl, wobei die Kohlenwasserstoffreste dieser Gruppen unsubstituiert oder substituiert sind durch einen bis drei Gruppen $R^c$, die ggf. durch einen bis drei Reste $R^a$ substituiert sein kann;

Die Verwendung von Strobilurinen ist bevorzugt.

Im Hinblick auf ihre Verwendung sind die nachstehend genannten Verbindungen besonders bevorzugt:

Methyl-E-methoxyimino-[α-(o-tolyloxy)-o-tolyl]acetat (Kresoximmethyl), Methyl-E-2-{2-[6-(2-cyanophenoxy)-pyrimidin-4-yloxy]-phenyl}-3-methoxyacrylat (Azoxystrobin), Methyl-E-methoxyimino-[α-(2-phenoxyphenyl)]-acetamid (Metominostrobin), Methyl-E-methoxyimino-[α-(2,5-dimethylphenoxy)-o-tolyl]-acetamid (Dimoxystrobin), Methyl-E-2-{2-[2-trifluormethylpyridyl-6-]oxymethyl]-phenyl}3-methoxyacrylat (Picoxystrobin), (E,E)-Methoximino-{2-[1-(3-trifluormethylphenyl)-ethylidenaminooxymethyl]-phenyl}-essigsäuremethylester (Trifloxystrobin), Methyl-N-(2-{[1-(4-chlorphenyl)-1H-pyrazol-3-yl]oxymethyl}phenyl)N-methoxycarbamat (Pyraclostrobin), Verbindungen der Formel I,

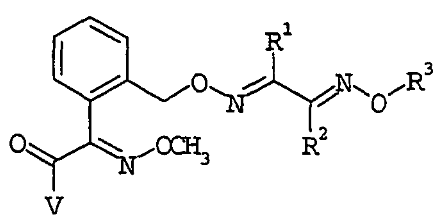

Ia

in der

V für $C_1$-$C_4$-Alkylanino oder $C_1$-$C_4$-Alkoxy steht,

$R^1$ für Wasserstoff, Halogen, Cyano, $C_1$-Haloalkyl oder $C_1$-$C_4$-Alkyl steht,

$R^2$ für Halogen, $C_1$-$C_4$-Alkyl, $C_1$-$C_6$-Alkoxy, $C_1$-$C_6$-Alkenyl oder $C_1$-$C_4$-Haloalkyl, Phenyl, Halophenyl steht,

$R^3$ für Wasserstoff, $C_1$-Haloalkyl, $C_1$-$C_4$-Alkyl, Cyclopropyl, $C_3$-$C_4$-Alkenyl oder $C_3$-$C_4$-Alkinyl steht.

Besonders bevorzugt sind auch Strobilurine der Formel Ib

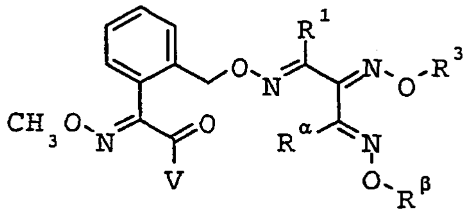

Ib

in der

V $NHCH_3$ oder $OCH_3$;

$R^1$ Wasserstoff, Cyano, Halogen, $C_1$-Haloalkyl oder $C_1$-$C_4$-Alkyl;

$R^3$ Wasserstoff, $C_1$-Haloalkyl, Cyclopropyl, $C_1$-$C_4$-Alkyl, $C_3$-$C_4$-Alkenyl, $C_3$-$C_4$-Alkinyl;

$R^\alpha$ Wasserstoff, $C_1$-Haloalkyl oder $C_1$-$C_4$-Alkyl;

$R^\beta$ Wasserstoff, $C_1$-Haloalkyl, Cyclopropyl, $C_1$-$C_4$-Alkyl, $C_3$-$C_4$-Alkenyl oder $C_3$-$C_4$-Alkinyl;

bedeuten.

Die in den folgenden Tabellen genannten Wirkstoffe sind besonders bevorzugt:

Tabelle I

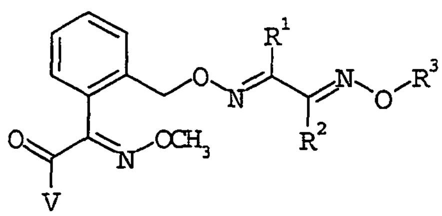

Ia

| Nr. | V | $R^1$ | $R^2$ | $R^3$ | Literatur |
|---|---|---|---|---|---|
| I-1 | $OCH_3$ | $CH_3$ | $CH_3$ | $CH_3$ | WO-A 95/18789 |
| I-2 | $OCH_3$ | $CH_3$ | $CH(CH_3)_2$ | $CH_3$ | WO-A 95/18789 |
| I-3 | $OCH_3$ | $CH_3$ | $CH_2CH_3$ | $CH_3$ | WO-A 95/18789 |
| I-4 | $NHCH_3$ | $CH_3$ | $CH_3$ | $CH_3$ | WO-A 95/18789 |
| I-5 | $NHCH_3$ | $CH_3$ | 4-F-$C_6H_4$ | $CH_3$ | WO-A 95/18789 |
| I-6 | $NHCH_3$ | $CH_3$ | 4-Cl-$C_6H_4$ | $CH_3$ | WO-A 95/18789 |
| I-7 | $NHCH_3$ | $CH_3$ | 2,4-$C_6H_3$ | $CH_3$ | WO-A 95/18789 |
| I-8 | $NHCH_3$ | Cl | 4-F-$C_6H_4$ | $CH_3$ | WO-A 98/38857 |
| I-9 | $NHCH_3$ | Cl | 4-Cl-$C_6H_4$ | $CH_2CH_3$ | WO-A 98/38857 |
| I-10 | $NHCH_3$ | $CH_3$ | $CH_2C(=CH_2)CH_3$ | $CH_3$ | WO-A 97/05103 |
| I-11 | $NHCH_3$ | $CH_3$ | $CH=C(CH_3)_2$ | $CH_3$ | WO-A 97/05103 |

(fortgesetzt)

| Nr. | V | $R^1$ | $R^2$ | $R^3$ | Literatur |
|---|---|---|---|---|---|
| I-12 | $NHCH_3$ | $CH_3$ | $CH=C(CH_3)_2$ | $CH_2CH_3$ | WO-A 97/05103 |
| I-13 | $NHCH_3$ | $CH_3$ | $CH=C(CH_3)CH_2CH_3$ | $CH_3$ | WO-A 97/05103 |
| I-14 | $NHCH_3$ | $CH_3$ | $O-CH(CH_3)_2$ | $CH_3$ | WO-A 97/06133 |
| I-15 | $NHCH_3$ | $CH_3$ | $O-CH_2CH(CH_3)_2$ | $CH_3$ | WO-A 97/06133 |

sowie folgende, aus WO-A 97/15552 bekannte Wirkstoffe:

Tabelle II

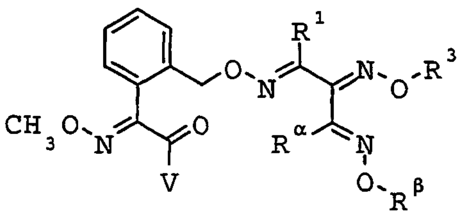

Ib

| Nr. | $R^1$ | $R^3$ | $R^\alpha$ | $R^\beta$ | V |
|---|---|---|---|---|---|
| II-1 | H | H | H | H | $NHCH_3$ |
| II-2 | H | $CH_3$ | H | $CH_3$ | $NHCH_3$ |
| II-3 | $CH_3$ | H | $CH_3$ | H | $NHCH_3$ |
| II-4 | $CH_3$ | $CH_3$ | $CH_3$ | $CH_3$ | $NHCH_3$ |
| II-5 | $CH_3$ | cyclo-$C_3H_5$ | $CH_3$ | cyclo-$C_3H_5$ | $NHCH_3$ |
| II-6 | $CH_3$ | $CH_2CH_3$ | $CH_3$ | $CH_2CH_3$ | $NHCH_3$ |
| II-7 | $CH_3$ | $CH(CH_3)_2$ | $CH_3$ | $CH(CH_3)_2$ | $NHCH_3$ |
| II-8 | $CH_3$ | $CH_2CH=CH_2$ | $CH_3$ | $CH_2CH=CH_2$ | $NHCH_3$ |
| II-9 | $CF_3$ | H | $CF_3$ | H | $NHCH_3$ |
| II-10 | $CF_3$ | $CH_3$ | $CF_3$ | $CH_3$ | $NHCH_3$ |
| II-11 | $CF_3$ | $CH(CH_3)_2$ | $CF_3$ | $CH(CH_3)_2$ | $NHCH_3$ |
| II-12 | CN | H | $CH_3$ | H | $NHCH_3$ |
| II-13 | CN | $CH_3$ | $CH_3$ | $CH_3$ | $NHCH_3$ |
| II-14 | H | H | H | H | $OCH_3$ |
| II-15 | H | $CH_3$ | H | $CH_3$ | $OCH_3$ |
| II-16 | $CH_3$ | H | $CH_3$ | H | $OCH_3$ |
| II-17 | $CH_3$ | $CH_3$ | $CH_3$ | $CH_3$ | $OCH_3$ |
| II-18 | $CH_3$ | cyclo-$C_3H_5$ | $CH_3$ | cyclo-$C_3H_5$ | $OCH_3$ |
| II-19 | $CH_3$ | $CH_2CH_3$ | $CH_3$ | $CH_2CH_3$ | $OCH_3$ |
| II-20 | $CH_3$ | $CH(CH_3)_2$ | $CH_3$ | $CH(CH_3)_2$ | $OCH_3$ |
| II-21 | $CH_3$ | $CH_2CH=CH_2$ | $CH_3$ | $CH_2CH=CH_2$ | $OCH_3$ |
| II-22 | $CF_3$ | H | $CF_3$ | H | $OCH_3$ |
| II-23 | $CF_3$ | $CH_3$ | $CF_3$ | $CH_3$ | $OCH_3$ |

(fortgesetzt)

| Nr. | $R^1$ | $R^3$ | $R^\alpha$ | $R^\beta$ | V |
|---|---|---|---|---|---|
| II-24 | CN | H | $CH_3$ | H | $OCH_3$ |
| II-25 | CN | $CH_3$ | $CH_3$ | $CH_3$ | $OCH_3$ |

Weitere besonders bevorzugte Wirkstoffe (a) sind neben den als bevorzugt bzw. besonders bevorzugt genannten Strobilurinen die folgenden Verbindungen: Pyroquilon, Tricyclazol, Isoprothiolane, Edifenphos, Ferimzone, Fludioxinil, Pencycuron, Flutolanil, Mepronil, Thifluzamid, Iprodione und Furametpyr.

Wirkstoff (b) ist mindestens ein Wirkstoff ausgewählt aus der Klasse der Herbizide, Insektizide und/oder Wachstumsregulatoren. Somit sind auch Kombinationen der Wirkstoffe (a) und (b) erfindungsgemäß.

Die folgende Liste von Insektiziden zeigt mögliche Wirkstoffe auf, soll aber nicht auf diese beschränkt sein:

Neonicotinoide/Chlornicotinyl-Verbindungen, wie Imidacloprid, Acetamiprid, Nitenpyram, Thiacloprid, Thiamethoxam, MIT-446 (Terafuranitdine;

Pyrrole, wie Chlorphenapyr, Fludioxonil;

Organophosphate, wie Acephate, Azinphos-methyl, Chlorpyrifos, Dimethoate, Disulfoton Fosthiazate, Methamidophos, Methidathion, Methyl-Parathion, Oxydemeton-methyl, Phorate, Phosalone, Phosmet, Profenofos, Trichlorfon, Malathion, Phosphamidon, Monocrotophos, Fenitrothion, Diazinon, EPN;

Carbamate, wie Alanycarb, Aldicarb, Benfuracarb, Carbofuran, Carbosulfan, Furathiocarb, Methomyl, Oxamyl, Pirimicarb, Thiodicarb, Fenobucarb;

Pyrethroide, wie Bifenthrin, Cyfluthrin, Cypermethrin, Deltamethrin, Ethofenprox, Esfenvalerate, Fenpropathrin, Flucythrinate, Fluvalinate, Lambda-Cyhalothrin, Permethrin, Pyrethrin I, Pyrethrin II, Silafluofen, Tau-Fluvalinate, Tralomethrin, alpha-Cypermethrin, Zeta-Cypermethrin;

Harnstoffderivate, wie Diflubenzuron, Flucycloxuron, Flufenoxuron, Hexaflumuron, Lufenuron, Novaluron, Triflumuron;

Juvenuide, wie Buprofezin, Diofenolan,Fenoxycarb, Pyriproxifen, Methoxyfenozide, Tebufenozide;

Verschiedene, wie Abamectin, Spinosad, Amitraz, Cartap, Chlorfenapyr, Diafenthiuron, Fipronil, Imidacloprid, Pyridaben, Tebufenpyrad, Nidinotefuran (MTI-446), Fenazaquin, Fenpyroxymate, Thiocyclam, Silafluofen, Nidinotefuran (MTI-446) und Clothionidin ((E)-1-(2-chlorothiazol-5ylmethyl)-3-methyl-2-nitroguanidine (TI-435).

Hierbei sind folgende Insektizide bevorzugt zu nennen:

Imidacloprid, Acetamiprid, Nitenpyram, Fipronil, Carbofuran, Carbosulfan, Benfuracarb, Thiacloprid, Fludioxonil, Nidinotefuran (MTI-446), Thiamethoxam, Clothionidin, Terfuranitdine.

Besonders bevorzugte Insektizide sind Nidinotefuran (MTI-446), Fipronil, Thiacloprid, Imidacloprid und Clothionidin.

Die folgende Liste von Herbiziden zeigt mögliche Wirkstoffe auf, soll aber nicht auf diese beschränkt sein:

1,3,4-Thiadiazole, wie buthidazole, cyprazole;,

Amide, wie allidochlor (CDAA), benzoylprop-ethyl, bromobutide, chlorthiamid, dimepiperate, dimethenamid, s-dimethenamid, diphenamid, etobenzanid (benzchlomet), flamprop-methyl, fluthiamide, fosamin, isoxaben, monalide, naptalame, pronamid (propyzamid), propanil;

Aminophosphorsäuren, wie bilanafos, (bialaphos), buminafos, glufosinate-ammonium, glyphosate, sulfosate;,

Aminotriazole, wie amitrol) Anilide (wie anilofos, mefenacet), Aryloxyalkansäuren (wie 2,4-D, 2,4-DB, clomeprop,

dichlorprop, dichlorprop-p, dichlorprop-p (2,4-DP-P), fenoprop (2,4,5-TP), fluoroxypyr, MCPA, MCPB, mecoprop, mecoprop-P, napropamide, napropanilide, triclopyr, N-(1-Cyano-1,2-dimethylpropyl)-2-(2,4-dichlorphenoxy)propionamide;

Benzoesäuren, wie chloramben, dicamba; Benzothiadiazinonen, wie bentazon;

Bleacher, wie clomazone (dimethazone), diflufenican, fluorochloridone, flupoxam, fluridone, pyrazolate, sulcotrione (chlormesulone), isoxaflutole, isoxachlortole, mesotrione) Carbamate (wie asulam, barban, butylate, carbetamid, chlorbufam, chlorpropham, cycloate, desmedipham, diallate, EPTC, esprocarb, molinate, orbencarb, pebulate, phenisopham, phenmedipham, propham, prosulfocarb, pyributicarb, sulfallate (CDEC), terbucarb, thiobencarb (benthiocarb), tiocarbazil, triallate, vernolate;

Chinolincarbonsäuren, wie quinclorac, quinmerac;

Chloracetanilide, wie acetochlor, alachlor, butachlor, butenachlor, diethatyl-ethyl, dimethachlor, metazachlor, metolachlor, pretilachlor, propachlor, prynachlor, terbuchlor, thenylchlor, xylachlor, s-metolachlor;

Cyclohexenone, wie alloxydim, tepraloxydim, clethodim, cloproxydim, cycloxydim, sethoxydim, tralkoxydim, 2-{1-[2-(4-Chlorphenoxy)propyloxyimino]butyl}-3-hydroxy-5-(2H-tetrahydrothiopyran-3-yl)-2- cyclohexen-1-on, butroxydim, clefoxydim;

Dichlorpropionsäuren, wie dalapon;

Dihydrobenzofurane, wie ethofumesate;

Dihydrofuran-3-one, wie flurtamone;

Dinitroaniline, wie benefin, butralin, dinitramin, ethalfluralin, fluchloralin, isopropalin, nitralin, oryzalin, pendimethalin, prodiamine, profluralin, trifluralin;

Dinitrophenole, wie bromofenoxim, dinoseb, dinoseb-acetat, dinoterb, DNOC;

Diphenylether, wie acifluorfen-sodium, aclonifen, bifenox, chlornitrofen (CNP), difenoxuron, ethoxyfen, fluorodifen, fluoroglycofen-ethyl, fomesafen, furyloxyfen, lactofen, nitrofen, nitrofluorfen, oxyfluorfen;

Dipyridylene, wie cyperquat, difenzoquat-methylsulfat, diquat, paraquat dichlorid;

Harnstoffe, wie benzthiazuron, buturon, chlorbromuron, chloroxuron, chlortoluron, cumyluron, dibenzyluron, cycluron, dimefuron, diuron, dymron, ethidimuron, fenuron, fluormeturon, isoproturon, isouron, karbutilat, linuron, methabenzthiazuron, metobenzuron, metoxuron, monolinuron, monuron, neburon, siduron, tebuthiuron, trimeturon;

Imidazole, wie isocarbamid;

Imidazolinone, wie imazamethapyr, imazapyr, imazaquin, imazethabenz-methyl (imazame), imazethapyr, imazapic;

Oxadiazole, wie methazole, oxadiargyl, oxadiazon;

Oxirane, wie tridiphane;

Phenole, wie bromoxynil, ioxynil;

Phenoxyphenoxypropionsäureester, wie clodinafop, cloquintocet, cyhalofop-butyl, diclofop-methyl, fenoxaprop-ethyl, fenoxapropp-ethyl, fenthiapropethyl, fluazifop-butyl, fluazifop-p-butyl, haloxyfop-ethoxyethyl, haloxyfop-methyl, haloxyfop-p-methyl, isoxapyrifop, propaquizafop, quizalofop-ethyl, quizalofop-p-ethyl, quizalofop-tefuryl;

Phenylessigsäuren, wie chlorfenac (fenac);

Phenylpropionsäuren, wie chlorophenprop-methyl;

Protoporphyrinogen-IX-Oxydase-Hemmer, wie benzofenap, cinidonethyl, flumiclorac-pentyl, flumioxazin, flumipropyn, flupropacil, fluthiacet-methyl, pyrazoxyfen, sulfentrazone, thidiazimin, carfentrazone;

Pyrazole, wie nipyraclofen, ET 751;

Pyridazine, wie chloridazon, maleic hydrazide, norflurazon, pyridate;

Pyridincarbonsäuren, wie clopyralid, dithiopyr, picloram, thiazopyr, diflufenzopyr;

Pyrimidylether, wie pyrithiobac-säure, pyrithiobac-sodium, KIH-2023, KIH-6127, pyribenzoxym;

Sulfonamide, wie flumetsulam, metosulam;

Sulfonylharnstoffe, wie amidosulfuron, azimsulfuron, bensulfuronmethyl, chlorimuron-ethyl, chlorsulfuron, cinosulfuron, cyclosulfamuron, ethametsulfuron methyl, ethoxysulfuron, flazasulfuron, halosulfuron-methyl, imazosulfuron, metsulfuron-methyl, nicosulfuron, primisulfuron, prosulfuron, pyrazosulfuron-ethyl, rimsulfuron, sulfometuron-methyl, thifensulfuron-methyl, triasulfuron, tribenuron-methyl, triflusulfuron-methyl, N-[[[4-methoxy-6-(trifluoromethyl)-1,3,5-triazin-2-yl]amino]carbonyl]-2-(trifluoromethyl)-Benzenesulfonamide, sulfosulfuron, idosulfuron;

Triazine, wie ametryn, atrazin, aziprotryn, cyanazine, cyprazine, desmetryn, dimethamethryn, dipropetryn, eglinazin-ethyl, hexazinon, procyazine, prometon, prometryn, propazin, secbumeton, simazin, simetryn, terbumeton, terbutryn, terbutylazin, trietazin;

Triazinone, wie ethiozin, metamitron, metribuzin;

Triazolcarboxamide, wie triazofenamid;

Uracile, wie bromacil, lenacil, terbacil;

Verschiedene Herbizide, wie benazolin, benfuresate, bensulide, benzofluor, butamifos, cafenstrole, chlorthal-dimethyl (DCPA), cinmethylin, dichlobenil, endothall, fluorbentranil, mefluidide, perfluidone, piperophos, flucabazone, oxaciclomefone (MY 100);

Die folgende Liste von Verbindungen mit wachstumsregulatorischer Wirkung zeigt mögliche Wirkstoffe auf, soll aber nicht auf diese beschränkt sein:

1-Naphthylacetamid, 1-Naphthylessigsäure, 2-Naphthyloxyessigsäure, 3-CPA, 4-CPA, Ancymidol, Anthrachinon, BAP, Butifos; Tribufos, Butralin, Chlorflurenol, Chlormequat, Clofencet, Cyclanilide, Daminozide, Dicamba, Dikegulac sodium, Dimethipin, Chlorfenethol, Etacelasil, Ethephon, Ethychlozate, Fenoprop, 2,4,5-TP, Fluoridamid, Flurprimidol, Flutriafol, Gibberellic acid, Gibberellin, Guazatin, Imazalil, Indolylbuttersäure, Indolylessigsäure, Karetazan, Kinetin, Lactidichlorethyl, Maleic hydrazide, Mefluidide, Mepiquat-chlorid, Naptalam, Paclobutrazole, Prohexadione calcium, Quinmerac, Sintofen, Tetcyclacis, Thidiazuron, Triiodobenzoicacid, Triapenthenol, Triazethan, Tribufos, Trinexapacethyl,Uniconazole.

Beispiele für geeignete polymere Bindemittel (d) sind:

Polyolefine, wie Polyethylen, Polypropylen, Polybutylen und Polyisobutinylylen; Vinylpolymerisate wie Polyvinylchlorid, Polyvinylpyrrolidon, Polyvinylinylcaprolactamcropolactouran, Polyvinylacetat, Polystyrol, Polyacrylnitril, Polyacrylate, Polymethacrylate; Polyacetale wie Polyoxymethylen; Polyester mit zumindest teilweise aliphatischen Estergruppen wie Polyhydroxybuttersäure, Polyhydroxyvaleriansäure, Polybutylensuccinate, Polyalkylenterephthalate wie Polyalkylenadipateterephthalate wie Polybutylenadipatterephthalate; Polyesteramide; Polyetheramide; Polyamide; Polyesteramide; Polycaprolactame Polyimide; Polyether; Polyetherketone; Polyurethane und Polycarbonate; Copolymere aus Ethylen/Vinylacetat, Ethylen/(Meth)acrylaten, Styrol/Acrylnitril, Styrol/Butadien, Styrol/Butadien/Acrylnitril, Olefin/Maleinsäureanhydrid; Collagen, Gelatine, Cellulose und Cellulosederivaten, Stärke und deren Derivate.

Bevorzugte Polymere sind beispielsweise Polyolefine, wie Polyethylen, Polypropylen und biologisch abbaubare Polyester, wie Polybutylensuccinate; Polyhydroxybuttersäure, Polyhydroxyvaleriansäure, Polyalkylenterephthalate wie Polyalkylenadipateterephthalate wie Polybutylenadipatterephthalate; Polyamide, Polyesteramide, Polycaprolactame sowie Collagen, Gelatine, Cellulose und Cellulosederivate, Stärke und deren Derivate.

Besonders bevorzugt sind biologisch abbaubare Polybutylenadipatterephthalate, wie sie beispielsweise in DE-A 44 40 858 beschrieben werden, deren Offenbarung hiermit einbezogen ist. Ein besonders bevorzugtes Polybutylenadipatterephthalat ist kommerziell erhältlich unter dem Handelsnamen Ecoflex® (BASF).

Der Anteil des thermoplatischen, wasserunlöslichen Polymers (d) in der Gesamtzubereitung kann je nach Wirksamkeit, Freisetzungsgeschwindigkeit und Verarbeitbarkeit variieren. Im allgemeinen liegt der Anteil im Bereich von 0-80 Gew.-%, bevorzugt im Bereich von 5-60 Gew.-% und besonders bevorzugt im Bereich von 15-50 Gew.-% bezogen auf die gesamte Zubereitung. Bedingung hierbei ist, daß die Zubereitung noch thermoplastisch verarbeitbar ist.

Als mineralische Füllstoffe (e) kommen Substanzen in Betracht, die aufgrund ihrer Dichte die Sedimentation der Granulate im wässrigen Medium verbessern bzw. ermöglichen, die sich in hohen Anteilen in thermoplastische Polymere einarbeiten lassen, nicht zu hart sind, d.h. im Extruder gut zu verarbeiten sind, chemisch indifferent sind, die Temperaturformstabilität der Formulierung erhöhen, selbst thermisch stabil sind, die Granulierbarkeit der Schmelze verbessern und die Freisetzung des Wirkstoffs ermöglichen, ökologisch unbedenklich und zudem möglichst preiswert sind.

Zudem wird die Einarbeitbarkeit niedrigviskoser Komponenten, wie z.B. des Wirkstoffs verbessert. Art und Anteil des Füllstoffs beeinflussen außerdem die Freisetzung des oder der Wirkstoffe aus der Polymermatrix.

Durch den Zusatz der Füllstoffe wird eine bessere Sedimentation (hohe Dichte des Minerals), Granulierbarkeit und eine Erhöhung der Temperaturformstabilität erzielt.

Beispiele für geeignete mineralische Füllstoffe (e) sind: Oxide, Hydroxide, Silikate, Carbonate und Sulfate von Calcium, Magnesium, Aluminium und Titan; im Einzelfall zum Beispiel Kreide, Gips, Bentonit, Kaolin, Wollastonit, Talkum, Phlogopit, Tonmineralien allgemein und Mischungen verschiedener mineralischer Füllstoffe.

Bevorzugte mineralische Füllstoffe (e) sind beispielsweise Kalk (Calciumcarbonat), Gips (Calciumsulfat) und Talkum (Magnesiumsilikat), die sich aufgrund ihrer geringen Härte und ihrer Schmierfähigkeit besonders gut verwenden lassen.

Die Menge an mineralischem Füllstoff (e) kann je nach Granulierbarkeit und Verarbeitbarkeit in weiten Grenzen variieren. So kann der Füllstoffgehalt im Bereich von 10-80 Gew.-%, bevorzugt im Bereich von 20-70 Gew.-% und besonders bevorzugt im Bereich von 30-60 Gew.-%, bezogen auf die gesamte Zubereitung, liegen. Die einzige Bedingung ist, daß die Zubereitung noch thermoplastisch verarbeitbar ist.

Zudem werden optionell anorganische oder organische Additive (f) verwendet um die Verarbeitbarkeit der Mischung zu verbessern und die Freisetzung des oder der Wirkstoffe zu modulieren. Der Anteil der Additive (f), bezogen auf die gesamte Zubereitung, sollte im Bereich von 0-20 Gew.-%, bevorzugt im Bereich von 0-10 Gew.-% und besonders bevorzugt im Bereich von 0-5 Gew.-% liegen. Die einzige Bedingung ist, daß die Zubereitung noch thermoplastisch verarbeitbar ist.

Die Gruppe der Additive (f) läßt sich folgendermaßen gliedern:

1) Übliche extrusionstechnische Hilfsstoffe, wie Schmiermittel, Formtrennmittel, Flußhilfsmittel, Weichmacher und Stabilisatoren, wie sie beispielsweise in DE-A 195 04 832 beschrieben werden, deren Offenbarung hiermit einbezogen ist;

2) Additive, die die Freisetzung des oder der Wirkstoffe beeinflussen:

- wasserlösliche anorganische Substanzen, wie z.B. Natriumchlorid, Natriumsulfat oder Calciumsulfat
- wasserlösliche organische Substanzen, wie z.B. Neopentylglykol, Polyethylenglykol oder Harnstoff
- nichtionische oder ionische Tenside, wie z.B. Fettalkoholethoxylate, Alkylbenzolsulfonate oder Alkylnaphthalinsulfonate
- Wachse, Fettalkohole und -säuren, Fette und Öle, wie z.B. Carnaubawachs, Stearinsäure, Stearylalkohol oder Rizinusöl

Um die Zubereitungen nach dem erfindungsgemäßen Verfahren herzustellen, können alle Komponenten entweder direkt in Form einer physikalischen Mischung miteinander verschmolzen werden oder mit der bereits vorliegenden Polymerschmelze gemischt werden. Im allgemeinen ist es üblich eine physikalische Mischung aus Wirkstoff (a), Wirkstoff (b), Polymer (c), Polymer (d), Füllstoff (e) und Additiv (f) gemeinsam im freien Zulauf, z.B. über eine Differentialdosierwaage in den Extruder zu dosieren und dort zu verschmelzen.

Die Verfahrensschritte des Mischens und Aufschmelzens können auf bekannte Art und Weise durchgeführt werden, wie beispielsweise in EP-A 240 904, EP-A 337 256 und EP-A 358 195 beschrieben.

Im allgemeinen erfolgt die Vermischung der Komponenten in der Schmelze in an sich bekannter Weise in Knetern oder Extrudern, vorzugsweise in Ein- oder Doppelschneckenextrudern in einem Temperaturbereich zwischen 50 und 200˚C, bevorzugt zwischen 50 und 150˚C, und besonders bevorzugt in einem Temperaturbereich zwischen 50

und 140˚C.

Der Extruder kann je nach Bedarf Misch-, Knet- und Rückführelemente enthalten. Gegebenenfalls können vorhandene Lösemittel und Restfeuchte mittels Entgasungsöffnungen oder Vakuumpumpen während der Extrusion abgezogen werden. Zudem können Komponenten in flüssiger als auch in fester Form durch seitliche Pumpen bzw. Förderaggregate eingebracht werden. Die Form des Extrusionswerkzeuges richtet sich nach der gewünschten Form.

Die Formgebung der austretenden Schmelze kann durch Stranggranulation der ganz oder teilweise abgekühlten Stränge, durch Heißabschlag der Schmelze am Extruderkopf mit einem Messerwalzengranulator, durch Unterwassergranulation direkt beim Austritt der Schmelze aus der Düse oder durch eine andere in der Kunststofftechnik üblichen Methode realisiert werden, die u.a. in EP-A 240 906 und DE-A 3 830 355 beschrieben sind. Die so erhaltenen festen Formen können z.B. durch Spritzguß zu Formkörpern weiterverarbeitet werden.

In einer bevorzugten Ausführungsform erfolgt die Formgebung der austretenden Schmelze durch Stranggranulation.

Zudem kann durch Coextrusion oder nachträgliches Coating, beispielsweise im Wirbelbett, mit Hilfe von gegebenenfalls wirkstoff- und polymerhaltigen Lösungen oder Dispersionen ein Schichtaufbau realisiert werden, der die Freisetzung des erfindungsgemäßen Formkörpers moduliert. Desweiteren kann Wirkstoff (b) oder ein weiterer Wirkstoff aus der selben Klasse wie Wirkstoff (b) auf diesem Wege auf das hergestellte Granulat aufgebracht werden.

Die über eines der erfindungsgemäßen Verfahren hergstellten Formulierungen sind ebenfalls Gegenstand der vorliegenden Erfindung.

Die durch das erfindungsgemäße Verfahren hergestellten Formulierungen eignen sich zur Bekämpfung von phytopathogenen Pilzen, unerwünschtem Pflanzenwuchs, unerwünschtem Insektenbefall und/oder zur Regulation des Wachstums von Pflanzen. Gegenstand der vorliegenden Erfindung ist somit ein Verfahren zur Bekämpfung von phytopathogenen Pilzen, unerwünschtem Pflanzenwuchs, unerwünschtem Insekten- oder Milbenbefall und/oder zur Regulation des Wachstums von Pflanzen, dadurch gekennzeichnet, daß man eine durch das erfindungsgemäe Verfahren hergestellte erfindungsgemäße feste Zubereitung eines Pflanzenschutzmittels in fester Form auf Pflanzen, deren Lebensraum oder auf Saatgut einwirken läßt.

Unter phytopathogene Pilzen bekämpfbar durch die erfindungsgemäßen Formulierungen sind beispielsweise folgende Spezies zu verstehen:

*Alternaria-Arten, Podosphaera-Arten, Sclerotinia*-Arten, *Physalospora canker* an Gemüse und Obst, *Botrytis cinerea* (Grauschimmel) an Erdbeeren, Gemüse, Zierpflanzen und Reben, *Coxynespora melonis* an Gurken, Erdbeeren; *Colletotrichum*-Arten an Gurken; *Diplocarpon rosae* an Rosen; *Elsinoe fawcetti* und *Diaporthe citri an Citrus*-Früchten; *Sphaerotheca*-Arten an Gurken, Kürbisgewächsen, Erdbeeren und Rosen; *Cercospora*-Arten an Erdnüssen, Zuckerrüben, Eierpflanzen und Dattelpflaumen; *Erysiphe cichoracearum* und *Sphaerotheca fuliginea* an Kürbisgewächsen, *Leveiillina taurica* an Piment; *Mycosphaerella*-Arten an Äpfeln und Japanischer Aprikose; *Phyllactinia kakicola, Gloesporium kaki,* an Japanischer Aprikose; *Gymnosporangium yamadae, Leptotthrydium pomi, Podosphaera leucotricha* und *Gloedes pomigena* an Äpfeln; *Cladosporium carpo*philum an Birnen und Japanischer Aprikose; *Phomopsis*-Arten an Birnen; *Phytopora*-Arten an Citrus Früchten, Kartoffeln, Zwiebeln; *Phytophthora infestans* an Kartoffeln und Tomaten, *Erysiphe graminis* (echter Mehltau) an Getreide, Fusarium- und *Verticillium*-Arten an verschiedenen Pflanzen, *Glomerella cingulata* an Tee; *Helminthosporium*-Arten an Getreide, Mycosphaerella-Arten an Bananen und Erdnüssen, *Plasmopara viticola* an Reben und Grapefruits, Personospora-Arten an Zwiebeln, Spinat und Chrysantemen; *Phaeoisariopsis vitis* und *Spaceloma ampelina* an Grapefruits; *Pseudocercosporella herpotrichoides* an Weizen und Gerste, *Pseudoperonospora*-Arten an Hopfen und Gurken, *Puccinia*-Arten und *Typhula*-Arten an Getreide, *Pyricularia oryzae* an Reis, *Rhizoctonia*-Arten an Baumwolle, Reis und Rasen, *Septoria nodorum* an Weizen, *Uncinula necator an Reben, Ustilago*-Arten an Getreide und Zuckerrohr, sowie Venturia-Arten (Schorf) an Äpfeln und Birnen.

Unter Insekten bekämpfbar durch die erfindungsgemäßen Formulierungen sind beispielsweise folgende tierische Schädlinge zu vestehen:

aus der Ordnung Lepidoptera (Schmetterlinge und Motten) beispielsweise *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithotis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plu*tella *xylostella, Pseudoplusia includens, Rhyacionia frustrana*, *Scrobipalpula absoluta, Sitotroga cerealella, Sparganothis pilleriana, Spo-*

*doptera frugiperda, Spodoptera littoralis, Spodoptera litura, Thaumatopoea pityocampa, Tortrix viridana, Trichoplusia* ni und *Zeiraphera canadensis,*

aus der Ordnung *Coleoptera* (Käfer), z.B. *Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus und Sitophilus granaria,*

*aus der Ordnung der Diptera (Zweiflügler), z.B. Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella fri t, Pegomya hysocyami, Phorbia antiqua, Phorbia brassicae, Phorbia* coarctata, *Rhagoletis cerasi, Rhagoletis pomonella, Tabanus bovinus, Tipula oleracea* und *Tipula paludosa,*

aus der Ordnung *Thysanoptera,* z.B. *Frankliniella fusca, Frankliniella occidentalis, Frankliniella tritici, Scirtothrips citri, Thrips oryzae, Thrips palmi* und *Thrips tabaci,*

aus der Ordnung *Hymenoptera,* z.B. *Athalia rosae, Atta cephalotes, Atta sexdens, Atta texana, Hoplocampa minuta, Hoplocampa testudinea, Monomorium pharaonis, Solenopsis geminata und Solenopsis invicta,*

aus der Ordnung *Heteroptera*, z.B. *Acrosternum hilare, Blissus leucopterus, Cyrtopeltis notatus, Dysdercus cingulatus, Dysclercus intermedius, Eurygaster integriceps, Euschistus impictiventris, Leptoglossus phyllopus, Lygus lineolaris, Lygus pratensis, Nezara viridula, Piesma quadrata, Solubea insularis* und *Thyanta perditor,*

aus der Ordnung *Homoptera,* z.B. *Acyrthosiphon onobrychis, Adelges laricis, Aphidula nasturtii, Aphis fabae, Aphis pomi, Aphis sambuci, Brachycaudus cardui, Brevicoryne brassicae, Cerosipha gossypii, Dreyfusia nordmannianae, Dreyfusia piceae, Dysaphis radicola, Dysaulacorthum pseudosolani, Empoasca fabae, Macrosiphum avenae, Macrosiphum euphorbiae, Macrosiphon rosae, Megoura viciae, Metopolophium dirhodum, Myzodes persi cae, Myzus cerasi, Nilaparvata lugens, Pemphigus bursarius, Perkinsiella saccharicida, Phorodon humuli, Psylla mali, Psylla piri, Rhopalomyzus ascalonicus, Rhopalosiphum maidis, Sappaphis mala, Sappaphis mali, Schizaphis graminum, Schizoneura lanuginosa, Trialeurodes vaporariorum und Viteus vitifolii,*

aus der Ordnung *Isoptera,* z.B. *Calotermes flavicollis, Leucotermes flavipes, Reticulitermes lucifugus und Termes natalensis,*

aus der Ordnung *Orthoptera,* z.B. *Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus* und *Tachycines asynamorus,*

aus der Ordnung *Acari,* z.B. *Amblyomma americanum, Amblyomma variegatum, Argas persicus, Boophilus annulatus, Boophilus decoloratus, Boophilus microplus, Brevipalpus phoenicis, Bryobia praetiosa, Dermacentor silvarum, Eotetranychus carpini, Eriophyes sheldoni, Hyalomma truncatum, Ixodes ricinus, Ixodes rubicundus, Ornithodorus moubata, Otobius megnini, Paratetranychus pilosus, Dermanyssus gallinae, Phyllocoptruta oleivora, Polyphagotarsonemus latus, Psoroptes ovis, Rhipicephalus appendiculatus, Rhipicephalus evertsi, Sarcoptes scabiei, Tetranychus cinnabarinus, Tetranychus kanzawai, Tetranychus pacificus, Tetranychus telarius* und *Tetranychus urticae,*

aus der Ordnung der Nematoden wie Wurzelgallennematoden, z.B. *Meloidogyne hapla, Meloidogyne incognita, Meloidogyne javanica, Zysten bildende Nematoden, z.B. Globodera rostochiensis, Heterodera avenae, Heterodera glycines, Heterodera schachtii, Heterodera trifolii, Stock- und Blattälchen, z.B. Belonolaimus longicaudatus, Ditylenchus destructor, Ditylenchus dipsaci, Heliocotylenchus multicinctus, Longidorus elongatus, Radopholus similis, Rotylenchus robustus, Trichodorus primitivus, Tylenchorhynchus claytoni, Tylenchorhynchus dubius, Pratylenchus neglectus, Pratylenchus penetrans, Pratylenchus curvitatus und Pratylenchus goodeyi.*

Unter der Bekämpfung unerwünschten Pflanzenwuches ist die Vernichtung von Unkräutern zu verstehen. Unter Unkraut im weitesten Sinne sind alle Pflanzen zu verstehen, die an Orten aufwachsen, an denen sie unerwünscht sind, zum Beispiel:

Dikotyle Unkräuter der Gattungen: *Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.*

Monokotyle Unkräuter der Gattungen: *Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristyslis, Sagi ttaria, Eleocharis, Scirpus, Paspalum, Ischaemum, Sphenoclea, Dactyloctenium, Agrostis, Alopecurus, Apera.*

Des weiteren können die erfindungsgemäßen Formulierungen in einer weiteren Zahl von Kulturpflanzen zur Beseitigung unerwünschter Pflanzen eingesetzt werden. In Betracht kommen beispielsweise folgende Kulturen:

*Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec. , Nicotiana tabacum (N.rustica), Olea europaea, Oryza sativa, Phaseolus lunatus, Phaseolus vulgaris, Picea abies, Pinus spec. , Pisum sativcun, Prunus avium, Prunus persica, Pyrus communis, Ribes sylestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera, Zea mays.*

Die Regulation des Wachstums von Pflanzen kann durch die bereits weiter oben erwähnten Wachstumsregulatoren erfolgen oder durch den Einsatz von Dünger.

In einer bevorzugten Ausführungsform des oben genannten Verfahrens werden die nach dem erfindungsgemäßen Verfahren hergestellten Formulierungen zur Bekämpfung von phytopathogenen Pilze sowie unerwünschtem Insektenbefall verwendet.

Die Applikation der erfindunngsgemäßen Zusammensetzugen kann im Vorauflauf- oder im Nachauflaufverfahren erfolgen. Sind die herbiziden Wirkstoffe für gewisse Kulturpflanzen weniger verträglich, so können Ausbringungstechniken angewandt werden, bei welchen die aus den erfindungsgmäßen Formulierugen hergestellten Spritzbrühen mit Hilfe der Spritzgeräte so gespritzt werden, daß die Blätter der empfindlichen Kulturpflanzen nach Möglichkeit nicht getroffen werden, wodurch die Wirkstoffe auf die Blätter darunter wachsender unerwünschter Pflanzen oder die unbedeckte Bodenfläche gelangen (post-directed, lay-by).

Die Aufwandmengen an Wirkstoff betragen je nach Bekämpfungsziel, Jahreszeit, Zielpflanzen und Wachstumsstadium 0,001 bis 3,0, vorzugsweise 0,01 bis 1,0 kg/ha.

Eine besonders bevorzugte Ausführungsform des oben genannten Verfahrens ist dadurch gekennzeichnet, daß man eine nach dem erfindungsgemäßen Verfahren hergestellte feste Zubereitung eines Pflanzenschutzmittels als Streugranulat auf Böden appliziert, die immer oder zeitweilig von Wasser bedeckt sind. Hierbei kann das Granulat auch direkt in die Kästen, in welchen sich die Pflanzensamen zwecks Aussaat befinden, eingebracht werden, so dass bei dem Einbringen der Kästen in das Wasser bereits präventiv Pilzbefall, unerwünschter Pflanzenwuchs, unerwünschter Insekten- oder Milbenbefall vermieden werden kann und/oder das Wachstum der Pflanzen reguliert werden kann.

In einer bevorzugten Ausführungsform des oben genannten Verfahrens werden über die nach dem erfindungsgemäßen Verfahren hergestellten Formulierungen phytopathogene Pilze sowie unerwünschtem Insektenbefall verwendet.

Im folgenden wird das erfindungsgemäße Verfahren anhand von Beispielen erläutert:

Beispiel 1

A) Allgemeine Durchführung

Die in den Beispielen angegebenen Mengen an Wirkstoff (a), Wirkstoff (b), Polymer (c), Polymer (d), Füllstoff (e) und Additiv (f) wurden gemischt und über eine Dosierwaage in die Förderzone (Zone 1) eines dichtkämmenden, gegenläufigen Doppelschneckenextruders(Zweiwellenschneckenkneter Fa. Werner & Pfleiderer) eingebracht und mit einem Durchsatz von 3 bis 4 kg/h bei einer Schneckendrehzahl von 150 rpm plastifiziert bzw. schonend homogenisiert. Die Schmelze wurde am Düsenkopf über eine 5-Loch Düse mit je einem Durch-messer von 2 mm ausgetragen und danach direkt auf ein Förderband aufgelegt. Die 5 Stränge wurden mit Hilfe dieses Metallförderbandes, zusätzlich noch über eine luftgekühlte Führungsrinne, je nach Auskühlunggrad entweder auf einen Walzenabzug (Fa.Haake) aufgewikkelt und manuell nachgranuliert oder direkt "on-line" in den Stranggranulator (Typ SGS 100/E , C.F. Scheer & CIE) zugeführt und zu einem zylindrischen Granulat mit einer Länge von 1,1 mm und einem durchschnittlichen Querschnitt von 1,0 - 1,2 mm geschnitten. Die "on-line" - verarbeiteten Stränge wurden direkt im Granulator mit gekühlter Druckluft (spezieller Trockeneiskühler) konditioniert.

In Tabelle 1 sind Angaben zu dem Temperaturverlauf in Extruder (Zone 1-10) und Granulator der folgenden Beispiele aufgeführt:

Tabelle 1

| Zone | 1 | 2 | 3 | 4 | 5 | 6 | 7 | 8 | 9 | 10 | Granulator |
|---|---|---|---|---|---|---|---|---|---|---|---|
| T in [˚C] | 80 | 120 | 150 | 150 | 150 | 151 | 140 | 130 | 130 | 150 | -30 |

Beispiel 2

Herstellung der Formulierungen

Folgende Einsatzstoffe wurden verwendet:

Wirkstoff (a):
2-(Methoxyimino)-2-{2-[(3E,6E)-5-(methoxyimino)-4,6-dimethyl-2,8-dioxa-3,7-diazanona-3,6-dien-1-yl]phenyl}-N-methylacetamid [II-4]; Wasserlöslichkeit = 0,08 g/1, Schmelzpunkt = 100˚C

Wirkstoff (b) :

I: Clothianidin Wasserlöslichkeit = 0,27 g/L, Schmelzpunkt = 176-178˚C; (TI-435, Takeda, Japan)

II: 1-Methyl-2-nitro-3-[tetrahydrofuryl)methyl]-guanidin; Wasserlöslichkeit = 54 g/l, Schmelzpunkt = 94,5-101,5˚C; (MTI-446, Mitsui Chemicals, Japan)

Polymer (c):
Polylactid (Lactea [M = 118000 g/mol], Mitsui Chemicals, Japan)

Polymer (d):
Polybutylenadipatterephthalat (Ecoflex, BASF AG, DE)

Füllstoff (e):
Calciumcarbonat (Merck, DE)

In Tabelle 2 sind die prozentualen Verhältnisse der in der oben beschriebenen Weise hergestellten Formulierungen dargestellt. Die Angabe erfolgt in Gewichtsprozent.

Formulierungen 1, 2 und 7 sind in der oben beschriebenen Weise nicht granulierbar, da die noch elastischen Stränge beim Schneiden gedehnt werden. Dadurch entsteht ein sehr inhomogenes Granulat, wobei die Durchsatzgeschwindigkeit etwa 0,3 kg/h pro Loch beträgt.

Formulierungen 3-6 und 8 können problemlos in der oben beschriebenen Weise granuliert werden. Es wird

ein homogen Granulat erhalten, mit einer Durchsatzgeschwindigkeit von 4 kg/h pro Loch.

Insbesondere Formulierung 8 ist bemerkenswert, da hier der Wirkstoff b(II) eine hohe Wasserlöslichkeit besitzt: Hier wären Formulierungen, bei denen der Wirkstoff vorschnell in Berührung mit Wasser kommt, nicht geeignet.

Tabelle 2

| Nr. \Komponente | a | b (I) | b (II) | c | d | e |
|---|---|---|---|---|---|---|
| 1 | 7 | - | - | - | 43 | 50 |
| 2 | 7 | 1,5 | - | - | 41,5 | 50 |
| 3 | 7 | - | - | 10 | 33 | 50 |
| 4 | 7 | - | - | 15 | 28 | 50 |
| 5 | 7 | - | - | 20 | 23 | 50 |
| 6 | 7 | 1,5 | - | 20 | 22,5 | 50 |
| 7 | 7 | - | 2 | - | 41 | 50 |
| 8 | 7 | - | 2 | 20 | 21 | 50 |

Beispiel 3

Die erhaltenen Granulate wurden auf ihre Sedimentationsfähigkeit in Wasser untersucht. Hierfür wurde 1 g Granulat in 1 1 Trinkwasser bei 20°C gegeben und 48 h erschütterungsfrei gelagert. Alle Formulierungenen sedimentieren in Wasser.

Des weiteren wurden die erhaltenen Granulate bezüglich ihrer Lagerstabilität untersucht. Es wurden 50 g Granulat 14 Tage in geschlossenen 100 ml Gefäßen im Trockenschrank bei 54°C gelagert. Die Granulate blieben nach der Wärmelagerung formstabil und rieselfähig, d.h. es wurde keine Verklebung beobachtet.

Beispiel 4

Für die Wirkstoffbestimmungen wurde ein UV/VIS-Spektrometer (Gerät HP 8452, Diode Array Spectrophotometer) sowie eine 1 cm Quarzküvette verwendet. Je nach Absorptionsmaximum des entsprechenden Wirkstoffes wurden die Messungen im Wellenlängenbereich von $\lambda$ =250 nm durchgeführt.

Zu Beginn des Experiments wurden von sämtlichen Wirkstoffen Eichkurven (Absorption vs Konzentration) erstellt.

Zur Bestimung der Wirkstofffreisetzung wurde jeweils 1 g Granulat der Formulierungen 1-8 in einem 1 1 Meßkolben mit 1 1 Trinkwasser überschichtet. Die Meßkolben wurden mindestens 4 Wochen bei 25°C erschütterungsfrei inkubiert. Zur Ermittlung der Wirkstofffreisetzung wurden in täglichen Abständen Proben entnommen. Vor der Probennahme wurde der Meßkolben um 180° gewendet und durchmischt, um eine homogene Wirkstoffverteilung sicherzustellen. Anschließend wurden die wässrigen Lösungen im UV/VIS-Spektrometer vermessen und in die Kolben zurückgegeben.

Die Freisetzungsrate des bzw. der jeweiligen Wirkstoffe sind in Abbildung 1 dargestellt. Hierbei wurde die prozentuale Freisetzung (100% entspricht der vollständigen Freisetzung von 50 ppm Wirkstoff bei 1g 5%iger Formulierung in 1 1 Wasser) gegen die Zeit in Tagen (sieh Abbildungen 1-3) aufgetragen.

Die kumulierten Freisetzung der Wirkstoffe zeigen einen wurzelfunktionsabhängigen Verlauf, wie es für einen Diffusionprozess zu erwarten ist ($(t)^{-1/2}$ - Gesetz) :

$$c = K \times (t)^{-1/2} \quad (t\text{: Zeit, } c\text{: Wirkstoffkonzentration})$$

Wie in den Abbildungen 1-3 ersichtlich, ist die Freisetzungsrate von der Zusammensetzung der Polymermatrix abhängig: Mit zunehmenden Anteil an Polymer (c) läßt sich die Freisetzungsrate gezielt verlangsamen.

## Patentansprüche

1. Verfahren zur Herstellung einer festen Zubereitung eines Pflanzenschutzmittels mit verzögerter Wirkstofffreisetzung, **dadurch gekennzeichnet, dass** man eine Schmelzextrusion einer Zusammensetzung enthaltend

   (a) 0,1 bis 80 Gew.-% mindestens eines fungiziden Wirkstoffes;
   (b) 0 bis 80 Gew.-% mindestens eines herbiziden, acariziden, insektiziden oder wachstumsregulierenden Wirkstoffes;
   (c) 3 bis 80 Gew.-% eines thermoplastischen, wasserunlöslichen-Polymers aus der Gruppe der Polylactide;
   (d) 5 bis 80 Gew.-% mindestens eines Polybutylenadipatterephthalates;
   (e) 10 bis 80 Gew.-% mindestens eines mineralischen Füllstoffs; und
   (f) 0 bis 20 Gew.-% anorganische oder organische Additive: wobei die Summe der Komponenten (a) bis (f) sich zu 100% ergibt, mit anschließender Formgebung durchführt.

2. Verfahren nach Anspruch 1, **dadurch gekennzeichnet, dass** die Zusammensetzung Komponente (d) in 5-60 Gew.-% enthält.

3. Verfahren nach den Ansprüchen 1 und 2, **dadurch gekennzeichnet, dass** man als Komponente (a) einen fungiziden wirkstoff ausgewählt aus der Gruppe bestehend aus Pyroquilon, Tricyclazol, Isoprothiolane, Edifenphos, Ferimzone, Fludioxinil, Pencycuron, Flutolanil, Mepronil, Thifluzamid, Iprodione, Furametpyr und/oder aus der Klasse der Strobilurine verwendet.

4. Verfahren nach Anspruch 3, **dadurch gekennzeichnet, dass** man als Komponente (a) ein Strobilurin der Formel I

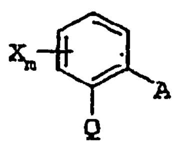

I

worin

X Halogen, $C_1$-$C_4$-Alkyl oder Trifluormethyl;
m 0 oder 1;
Q C (=CH-$CH_3$) -$COOCH_3$, C (=CH-$OCH_3$) -$COOCH_3$, C (=N-$OCH_3$) -$CONHCH_3$, C (=N-$OCH_3$) -$COOCH_3$ oder N(-$OCH_3$)-$COOCH_3$;
A -O-B, -$CH_2$O-B, -O$CH_2$-B, -CH=CH-B, -C≡C-B, -$CH_2$O-N=C($R^1$)-B oder -$CH_2$O-N=C ($R^1$) -C ($R^2$) =N-O$R^3$, wobei

B Phenyl, Naphthyl, 5-gliedriges oder 6-gliedriges Hetaryl oder 5-gliedriges oder 6-gliedriges Heterocyclyl, enthaltend ein bis drei N-Atome und/oder ein 0- oder S-Atom oder ein oder zwei O- und/oder S- Atome, wobei die Ringsysteme unsubstituiert oder substituiert sind durch einen bis drei Reste $R^a$:

$R^a$ Cyano. Nitro, Amino, Aminocarbonyl, Aminothiocarbonyl, Halogen, $C_1$-$C_6$-Alkyl, $C_1$-$C_6$-Halogenalkyl. $C_1$-$C_6$-Alkylcarbonyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogenalkoxy, $C_1$-$C_6$-Alkyloxycarbonyl, $C_1$-$C_6$-Alkylthio, $C_1$-$C_6$-Alkylamino, Di-$C_1$-$C_6$-Alkylamino, $C_1$-$C_6$-Alkylaminocarbonyl, Di-$C_1$-$C_6$-Alkylaminacarbonyl, $C_1$-$C_6$-Alkylaminothiocarbonyl, Di-$C_1$-$C_6$-Alkylaminothiocarbonyl, $C_2$-$C_6$-Alkenyl, $C_2$-$C_6$-Alkenyloxy, Phenyl, Phenoxy, Benzyl, Benzyloxy, 5- oder 6-gliedriges Heterocyclyl, 5- oder 6-gliedriges Hetaryl, 5- oder 6-gliedriges Hetaryloxy, CR$^{\alpha}$) =NOR$^{\beta}$ oder OC($R^{\alpha}$)$_2$-C($R^{\beta}$)=NOR$^{\beta}$,
wobei die cyclischen Reste ihrerseits unsubstituiert oder substituiert sind durch einen bis drei Reste $R^b$:
$R^b$ Cyano, Nitro, Halogen, Amino, Aminocarbonyl, Aminothiocarbonyl, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_3$-$C_6$-Cycloalkyl, $C_1$-$C_6$-Alkoxy, $C_1$-$C_6$-Halogrenalkoxy, $C_1$-$C_6$-Alkoxycarbonyl, $C_1$-$C_6$-Alkylthio, $C_1$-$C_6$-Alkylamino, Di-$C_1$-$C_6$-alkylamino, $C_1$-$C_6$-Alkylamiaocarbonyl, Di-$C_1$-$C_6$-alkylaminocarbonyl, $C_1$-$C_6$-Alkylaminothiocarbonyl, Di-$C_1$-$C_6$-alkylaminothiocarbonyl, $C_2$-$C_6$-Mkenyl, $C_2$-$C_6$-Alkenyloxy, $C_3$-$C_6$-Cycloalkyl, $C_3$-$C_6$-Cycloalkenyl, Phenyl, Phenoxy, Phenylthio, Benzyl, Benzyloxy, 5- oder 6-gliedriges Heterocyclyl, 5- oder 6-gliedriges Hetaryl, 5- oder 6-gliedriges Hetaryloxy oder $C(R^{\alpha})=NOR^{\beta}$;

$R^{\alpha}$,$R^{\beta}$ Wasserstoff oder $C_1$-$C_6$-Alkyl;

$R^1$ Wasserstoff, Cyano, $C_1$-$C_4$-Alkyl, $C_1$-$C_4$-Halogenalkyl, $C_3$-$C_6$-Cycloalkyl, $C_1$-$C_4$-Alkoxy;
$R^2$ Phenyl, Phenylcarbonyl, Phenylsulfonyl, 5- oder 6-gliedriges Hetaryl, 5- oder 6-gliedriges Hetarylcarbonyl oder 5- oder 6-gliedriges Hetarylsulfonyl, wobei die Ringsysteme unsubstituiert oder substituiert sind durch ein bis drei Reste $R^a$;
$C_1$-$C_{10}$-Alkyl, $C_3$-$C_6$-Cycloalkyl, $C_2$-$C_{10}$-Alkenyl, $C_2$-$C_{10}$-Alkinyl, $C_1$-$C_{10}$-Alkylcaxbonyl, $C_2$-$C_{10}$-Alkenylcarbonyl, $C_3$-$C_{10}$-Alkinylcarbonyl, $C_1$-$C_{10}$-Alkylsulfonyl, oder $C(R^{\alpha})=NOR^{\beta}$, wobei die Kohlenwasserstoffreste dieser Gruppen unsubstituiert oder substituiert sind durch einen bis drei Reste $R^c$:

$R^c$ Cyano, Nitro, Amino, Aminocarbonyl, Aminothiocarbonyl, Halogen, $C_1$-$C_6$-Alkyl, $C_1$-$C_6$-Halogenalkyl, $C_1$-$C_6$-Alkylsulfonyl, $C_1$-$C_6$-Alkylsulfoxyl, $C_1$-$C_6$-Alkoxy, $C_1$-$C_6$-Halogenalkoxy, $C_1$-$C_6$-Alkoxycarbonyl, $C_1$-$C_6$-Alkylthio,$C_1$-$C_6$-Alkylamino,Di-$C_1$-$C_6$-alkylamino,$C_1$-$C_6$-Alkylaminocarbonyl,Di-$C_1$-$C_6$-alkylaminoearbnnyl. $C_1$-$C_6$-Alkylaminothiocarbonyl, Di-$C_1$-$C_6$-alkylaminothiocarbonyl, $C_2$-$C_6$-Alkenyl, $C_2$-$C_6$-Alkenyloxy.
$C_3$-$C_6$-Cycloalkyl, $C_3$-$C_6$-Cycloalkyloxy, 5- oder 6-gliedriges Heterocyclyl, 5- oder 6-gliedriges Heterocyclyloxy, Benzyl, Benzyloxy, Phenyl, Phenoxy, Phenylthio, 5- oder 6-gliedriges Hetaryl, 5- oder 6-gliedriges Hetaryloxy und Hetarylthio, wobei die cyclischen Gruppen ihrerseits partiell oder vollständig halogeniert sein können oder einen bis drei Reste $R^a$ tragen können; und

$R^3$ Wasserstoff,
$C_1$-$C_6$-Alkyl, $C_2$-$C_6$-Rlkenyl, $C_2$-$C_6$-Alkinyl, wobei die Kohlenwasserstoffreste dieser Gruppen unsubstituiert

oder substituiert sind durch eine bis drei Gruppen $R^c$, die ggf. durch einen bis drei Reste $R^a$ substituiert sein kann; verwendet.

**5.** Verfahren nach Anspruch 4, wobei das Strobilurin der Formel Ia entspricht

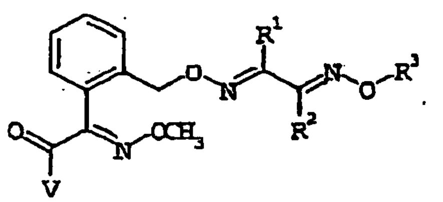

Ia

in der

V für $C_1$-$C_4$-Alkylamimo oder $C_1$-$C_4$-Alkoxy steht,
$R^1$ für Wasserstoff, Halogen, Cyano, $C_1$-Haloalkyl oder $C_1$-$C_4$-Alkyl steht,
$R^2$ für Halogen, $C_1$-$C_4$-Alkyl, $C_1$-$C_6$-Alkoxy, $C_1$-$C_6$-Alkenyl oder $C_1$-$C_4$-Haloalkyl. Phenyl, Halophenyl steht,
$R^3$ für Wasserstoff, $C_1$-Haloalkyl, $C_1$-$C_4$-Alkyl, Cyclopropyl. $C_3$-$C_4$-Alkenyl oder $C_3$-$C_4$-Alkinyl steht.

**6.** Verfahren nach Anspruch 4, wobei das Strobilurin der Formel Ib entspricht

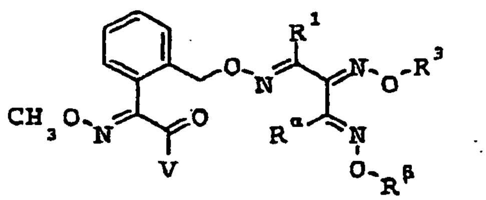

Ib

in der

V $NHCH_3$ oder $OCH_3$;
$R^1$ Wasserstoff, Cyano, Halogen, $C_1$-Haloalkyl oder $C_1$-$C_4$-Alkyl;
$R^3$ Wasserstoff, $C_1$-Haloalkyl, Cyclopropyl, $C_1$-$C_4$-Alkyl, $C_3$-$C_4$-Alkenyl, $C_3$-$C_4$-Alkinyl;
$R^\alpha$ Wasserstoff, $C_1$-Haloalkyl oder $C_1$-$C_4$-Alkyl;
$R^\beta$ Wasserstoff, $C_1$-Haloalkyl, Cyclopropyl, $C_1$-$C_4$-Alkyl, $C_3$-$C_4$-Alkenyl oder $C_3$-$C_4$-Alkinyl.

**7.** Verfahren nach den Ansprüchen 1 bis 6, **dadurch gekennzeichnet, dass** man als Komponente (b) einen pestiziden Wirkstoff ausgewählt aus der Gruppe Imidacloprid, Acetamiprid, Nitenpyram, Fipronil, Carbofuran, Carbosulfan, Benfuracarb, Thiacloprid. Fludioxonil, Tefuranitde, Thiamethoxam, (E)-1-(2-Chlorothiazol-5ylmethyl)-3-methyl-2-nitroguanidine und Terafuranitdine verwendet.

**8.** Verfahren nach den Ansprüchen 1 bis 7, **dadurch gekennzeichnet, dass** man als Komponente (e) Calciumcarbonat, Magnesiumsilikat oder Calciumsulfat verwendet.

**9.** Verfahren zur Herstellung einer festen Zubereitung eines Pflanzenschutzmittels nach einem der Ansprüche 1-8, **dadurch gekennzeichnet, daß** man die Komponenten (a). (b), (c), (d), (e) und (f) in einem Extruder zu einem plastischen Gemisch aufschmilzt und die Schmelze im Anschluß mittels Stranggranulation zerkleinert.

**10.** Feste Zubereitung eines Pflanzenschutzmittels herstellbar gemäß einem der Ansprüche 1-9.

**11.** Verfahren zur Bekämpfung von phytopathogenen Pilzen, unerwünschtem Pflanzenwuchs, unerwünschtem Insekten- oder Milbenbefall und/oder zur Regulation des Wachstums von Pflanzen, **dadurch gekennzeichnet, daß** man eine Zubereitung eines Pflanzenschutzmittels gemäß Anspruch 10 in fester Form auf Pflanzen, deren Lebensraum oder auf Saatgut einwirken läßt.

**12.** Verfahren nach Anspruch 11, **dadurch gekennzeichnet, daß** man eine feste Zubereitung eines Pflanzenschutzmittels nach Anspruch 10 als Streugranulat auf Böden appliziert, die immer oder zeitweilig von Wasser bedeckt sind.

## Claims

**1.** A method of preparing a solid formulation of a slow-release crop protection product, which comprises carrying out a melt extrusion of a composition comprising

(a) 0.1 to 80% by weight of at least one fungicidal active ingredient;
(b) 0 to 80% by weight of at least one herbicidal, acaricidal, insecticidal or growth-regulatory active ingredient;
(c) 3 to 80% by weight of a thermoplastic, water-insoluble polymer from the group of the polylactides;
(d) 5 to 80% by weight of at least one polybutylene adipate terephthalate;
(e) 10 to 80% by weight of at least one mineral filler; and
(f) 0 to 20% by weight of inorganic or organic additives;

the total of components (a) to (f) being 100%, and subsequently shaping the extrudate.

**2.** The method according to claim 1, wherein the composition comprises 5 to 60% by weight of component (d).

**3.** The method according to claims 1 and 2, wherein a fungicidal active ingredient selected from the group consisting of pyroquilon, tricyclazol, isoprothiolane, edifenphos, ferimzone, fludioxinil, pencycuron, flutolanil, mepronil, thifluzamid, iprodione, furametpyr and/or from the class of the strobilurins is used as component (a).

**4.** The method according to claim 3, wherein a strobilurin of the formula I

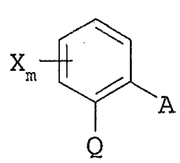

I

in which

X is halogen, $C_{1-}C_4$-alkyl or trifluoromethyl;
m is 0 or 1;
Q is $C(=CH-CH_3)-COOCH_3$, $C(=CH-OCH_3)-COOCH_3$, $C(=N-OCH_3)-CONHCH_3$, $C(=N-OCH_3)-COOCH_3$ or $N(-OCH_3)-COOCH_3$;
A is -O-B, $-CH_2O-B$, $-OCH_2-B$, -CH=CH-B, -C≡C-B, $-CH_2O-N=C(R^1)-B$ or $-CH_2O-N=C(R^1)-C(R^2)=N-OR^3$, where

B is phenyl, naphthyl, 5-membered or 6-membered hetaryl or 5-membered or 6-membered heterocyclyl, comprising one to three N atoms and/or one O or S atom or one or two O and/or S atoms, the ring systems being unsubstituted or substituted by one to three radicals $R^a$:

$R^a$ is cyano, nitro, amino, aminocarbonyl, aminothiocarbonyl, halogen, $C_{1-}C_6$-alkyl, $C_{1-}C_6$-haloalkyl, $C_{1-}C_6$-alkylcarbonyl, $C_{1-}C_6$-alkylsulfonyl, $C_{1-}C_6$-alkylsulfoxyl, $C_{3-}C_{6-}$cycloalkyl, $C_{1-}C_6$-alkoxy, $C_{1-}C_6$-haloalkoxy, $C_{1-}C_6$-alkyloxycarbonyl, $C_{1-}C_6$-alkylthio, $C_{1-}C_6$-alkylamino, di-$C_{1-}C_6$-alkylamino, $C_{1-}C_6$-alkylaminocarbonyl, di-$C_{1-}C_6$-alkylaminocarbonyl, $C_{1-}C_6$-alkylaminothiocarbonyl, di-$C_{1-}C_6$-alkylaminothiocarbonyl, $C_2$-$C_6$-alkenyl, $C_2$-$C_6$-alkenyloxy, phenyl, phenoxy, benzyl, benzyloxy, 5- or 6-membered heterocyclyl, 5- or 6-membered hetaryl, 5- or 6-membered hetaryloxy, $CR^{\alpha})=NOR^{\beta}$ or $OC(R^{\alpha})_2-C(R^{\beta})=NOR^{\beta}$,
the cyclic radicals, in turn, being unsubstituted or substituted by one to three radicals $R^b$:
$R^b$ is cyano, nitro, halogen, amino, amino-carbonyl, aminothiocarbonyl, $C_{1-}C_6$-alkyl, $C_{1-}C_6$-haloalkyl, $C_1$-$C_6$-alkylsulfonyl, $C_{1-}C_6$-alkylsulfoxyl, $C_3$-$C_6$-cycloalkyl, $C_{1-}C_6$-alkoxy, $C_1$-$C_6$-haloalkoxy, $C_{1-}C_6$-alkoxycarbonyl, $C_{1-}C_6$-alkylthio, $C_{1-}C_6$-alkylamino, di-$C_{1-}C_6$-alkylamino, $C_{1-}C_6$-alkylaminocarbonyl, di-$C_{1-}C_6$-alkylaminocarbonyl, $C_{1-}C_6$-alkylaminothiocarbonyl, di-$C_{1-}C_6$-alkylaminothiocarbonyl, $C_{2-}C_6$-alkenyl, $C_2$-$C_6$-alkenyloxy, $C_3$-$C_6$-cycloalkyl, $C_3$-$C_6$-cycloalkenyl, phenyl, phenoxy, phenylthio, benzyl, benzyloxy, 5- or 6-membered heterocyclyl, 5- or 6-membered hetaryl, 5- or 6-membered hetaryloxy or $C(R^{\alpha})=NOR^{\beta}$;

$R^{\alpha}$, $R^{\beta}$ are hydrogen or $C_{1-}C_6$-alkyl;

$R^1$ is hydrogen, cyano, $C_{1-}C_4$-alkyl, $C_{1-}C_4$-haloalkyl, $C_3$-$C_6$-cycloalkyl, $C_{1-}C_4$-alkoxy;
$R^2$ is phenyl, phenylcarbonyl, phenylsulfonyl, 5- or 6-membered hetaryl, 5- or 6-membered hetarylcarbonyl or 5- or 6-membered hetarylsulfonyl, the ring systems being unsubstituted or substituted by one to three radicals $R^a$; $C_{1-}C_{10}$-alkyl, $C_{3-}C_{6-}$cycloalkyl, $C_{2-}C_{10}$-alkenyl, $C_{2-}C_{10}$-alkynyl, $C_{1-}C_{10}$-alkylcarbonyl, $C_{2-}C_{10}$-alkenylcarbonyl, $C_{3-}C_{10}$-alkynylcarbonyl, $C_{1-}C_{10}$-alkylsulfonyl, or $C(R^{\alpha})=NOR^{\beta}$, the hydrocarbon radicals of these groups being unsubstituted or substituted by one to three radicals $R^c$:

$R^c$ is cyano, nitro, amino, aminocarbonyl, aminothiocarbonyl, halogen, $C_{1-}C_6$-alkyl, $C_{1-}C_6$-haloalkyl, $C_{1-}C_6$-alkylsulfonyl, $C_{1-}C_6$-alkylsulfoxyl, $C_{1-}C_6$-alkoxy, $C_{1-}C_6$-haloalkoxy, $C_{1-}C_6$-alkoxycarbonyl, $C_{1-}C_6$-alkylthio, $C_{1-}C_6$-alkylamino, di-$C_{1-}C_6$-alkylamino, $C_{1-}C_6$-alkylaminocarbonyl, di-$C_{1-}C_6$-alkylaminocarbonyl, $C_{1-}C_6$-alkylaminothiocarbonyl, di-$C_{1-}C_6$-alkylaminothiocarbonyl, $C_{2-}C_6$-alkenyl, $C_{2-}C_6$-alkenyloxy, $C_{3-}C_6$-cycloalkyl, $C_{3-}C_{6-}$cycloalkyloxy, 5- or 6-membered heterocyclyl, 5- or 6-membered heterocyclyloxy, benzyl, benzyloxy, phenyl, phenoxy, phenylthio, 5- or 6-membered hetaryl, 5- or 6-membered hetaryloxy and hetarylthio, it being possible for the cyclic groups, in turn, to be partially or fully halogenated or to have attached to them one to three radicals $R^a$; and

$R^3$ is hydrogen,
$C_{1-}C_6$-alkyl, $C_{2-}C_6$-alkenyl, $C_2$-$C_6$-alkynyl, the hydrocarbon radicals of these groups being unsubstituted or substituted by one to three groups $R^c$ which can optionally be substituted by one to three radicals $R^a$;

is used as component (a).

**5.** The method according to claim 4, wherein the strobilurin is of the formula Ia

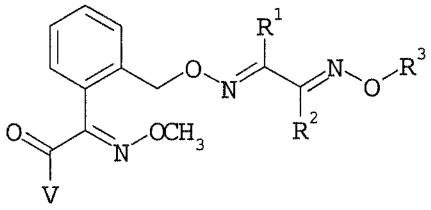

Ia

where

V is $C_1$-$C_4$-alkylamino or $C_1$-$C_4$-alkoxy,
$R^1$ is hydrogen, halogen, cyano, $C_1$-haloalkyl or $C_1$-$C_4$-alkyl,
$R^2$ is halogen, $C_1$-$C_4$-alkyl, $C_1$-$C_6$-alkoxy, $C_1$-$C_6$-alkenyl or $C_1$-$C_4$-haloalkyl, phenyl, halophenyl,
$R^3$ is hydrogen, $C_1$-haloalkyl, $C_1$-$C_4$-alkyl, cyclopropyl, $C_3$-$C_4$-alkenyl or $C_3$-$C_4$-alkynyl.

**6.** The method according to claim 4, wherein the strobilurin is of the formula Ib

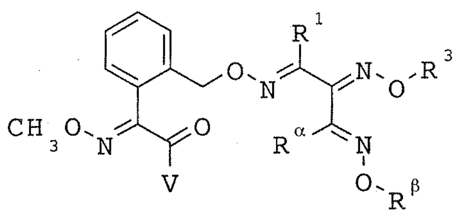

Ib

where

V is $NHCH_3$ or $OCH_3$;
$R^1$ is hydrogen, cyano, halogen, $C_1$-haloalkyl or $C_1$-$C_4$-alkyl;
$R^3$ is hydrogen, $C_1$-haloalkyl, cyclopropyl, $C_1$-$C_4$-alkyl, $C_3$-$C_4$-alkenyl, $C_3$-$C_4$-alkynyl;
$R^\alpha$ is hydrogen, $C_1$-haloalkyl or $C_1$-$C_4$-alkyl;
$R^\beta$ is hydrogen, $C_1$-haloalkyl, cyclopropyl, $C_1$-$C_4$-alkyl, $C_3$-$C_4$-alkenyl or $C_3$-$C_4$-alkynyl.

**7.** The method according to any of claims 1 to 6, wherein a pesticidal active ingredient selected from the group consisting of imidacloprid, acetamiprid, nitenpyram, fipronil, carbofuran, carbosulfan, benfuracarb, thiacloprid, fludioxonil, tefuranitde, thiamethoxam, (E)-1-(2-chlorothiazol-5-ylmethyl)-3-methyl-2-nitroguanidine and terafuranitdine is used as component (b).

**8.** The method according to any of claims 1 to 7, wherein calcium carbonate, magnesium silicate or calcium sulfate is used as component (e).

**9.** The method of preparing a solid formulation of a crop protection product according to any of claims 1-8, which comprises melting components (a), (b), (c), (d), (e) and (f) in an extruder to give a plastic mixture and subsequently comminuting the melt by extrusion granulation.

**10.** The solid formulation of a crop protection product prepared according to any of claims 1-9.

**11.** The method of controlling phytopathogenic fungi, undesired plant growth, undesired attack by insects or mites and/or for regulating the growth of plants, which comprises allowing a formulation of a crop protection product according to claim 10 in solid form to act on plants, their environment or on seed.

**12.** The method according to claim 11, wherein a solid formulation of a crop protection product according to claim 10 is applied, in the form of spreadable granules, to soils which are permanently or temporarily flooded.

## Revendications

**1.** Procédé de préparation d'une préparation solide d'un agent phytosanitaire à libération retardée de substance active, **caractérisé en ce que** l'on entreprend une extrusion en masse fondue d'une composition contenant :

(a) de 0,1 à 80% en poids d'au moins une substance active fongicide,
(b) de 0 à 80% en poids d'au moins une substance active herbicide, acaricide, insecticide ou régulatrice de la croissance,
(c) de 3 à 80% en poids d'un polymère thermoplastique, insoluble dans l'eau du groupe des polylactides,
(d) de 5 à 80% en poids d'au moins un polybutylène adipate téréphtalate,
(e) de 10 à 80% en poids d'au moins une matière de remplissage minérale, et
(f) de 0 à 20% en poids d'additifs inorganiques ou organiques,

la somme des composants (a) à (f) totalisant 100%, avec formage subséquent.

**2.** Procédé suivant la revendication 1, **caractérisé en ce que** la composition contient le composant (d) à raison de 5 à 60% en poids.

**3.** Procédé suivant les revendication 1 et 2, **caractérisé en ce que** l'on utilise en tant que composant (a) une substance active fongicide choisie dans le groupe formé par le pyroquilon, le tricyclazole, l'isoprothiolane, l'edifenphos, la ferimzone, le fludioxinil, le pencycuron, le flutolanil, le mepronil, le thifluzamide, l'iprodione, le furametpyr et/ou dans la classe des strobilurines.

**4.** Procédé suivant la revendication 3, **caractérisé en ce que** l'on utilise en tant que composant (a) une strobilurine de la formule (I)

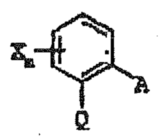

I

dans laquelle :

X représente un halogène, un radical alkyle en $C_1$ à $C_4$ ou trifluorométhyle,
m vaut 0 ou 1,
Q représente $C(=CH\text{-}CH_3)\text{-}COOCH_3$, $C(=CH\text{-}OCH_3)\text{-}COOCH_3$, $C(=N\text{-}OCH_3)\text{-}CONHCH_3$,$C(=N\text{-}OCH_3)\text{-}COOCH_3$ ou $N(\text{-}OCH_3)\text{-}COOCH_3$,
A représente -O-B, $-CH_2O$-B $-OCH_2$-B, -CH=CH-B,-C=C-B, $-CH_2O\text{-}N=C(R^1)$ -B ou $-CH_2O\text{-}N=C(R^1)\text{-}C(R^2)=N\text{-}OR^3$, avec

B représentant un radical phényle, naphtyle, hétaryle à 5 membres ou à 6 membres ou

hétérocyclyle à 5 membres ou à 6 membres, contenant d'un à trois atomes de N et/ou un atome de O ou de S ou un ou deux atomes de O et/ou de S, les systèmes cycliques pouvant être non substitués ou substitués par un à trois radicaux $R^a$,

$R^a$ représentant un radical cyano, nitro, amino, aminocarbonyle, aminothiocarbonyle, halogéno, alkyle en $C_1$ à $C_6$, halogénoalkyle en $C_1$ à $C_6$, alkylcarbonyle en $C_1$ à $C_6$, alkylsulfonyle en $C_1$ à $C_6$, alkylsulfoxyle en $C_1$ à $C_6$, cycloalkyle en $C_3$ à $C_6$, alcoxy en $C_1$ à $C_6$, halogénoalcoxy en $C_1$ à $C_6$, alkyloxycarbonyle en $C_1$ à $C_6$, alkylthio en $C_1$ à $C_6$, alkylamino en $C_1$ à $C_6$, di-($C_1$-$C_6$)-alkylamino, alkylaminocarbonyle en $C_1$ à $C_6$, di-($C_1$-$C_6$)-alkylaminocarbonyle, alkylaminothiocarbonyle en $C_1$ à $C_6$, di-($C_1$-$C_6$)-alkylaminothiocarbonyle, alcényle en $C_2$ à $C_6$, alcényloxy en $C_2$ à $C_6$, phényle, phénoxy, benzyle, benzyloxy, hétérocyclyle à 5 ou 6 membres, hétaryle à 5 ou 6 membres, hétaryloxy à 5 ou 6 membres, $CR^{\alpha}=NOR^{\beta}$ ou $OC(R^{\alpha})_2\text{-}C(R^{\beta})=NOR^{\beta}$,
les radicaux cycliques étant de leur côté non substitués ou substitués par un à trois radicaux $R^b$ :
$R^b$ représentant un radical cyano, nitro, halogéno, amino, aminocarbonyle, aminothiocarbonyle, alkyle en

$C_1$ à $C_6$, halogénoalkyle en $C_1$ à $C_6$, alkylsulfonyle en $C_1$ à $C_6$, alkylsulfoxyle en $C_1$ à $C_6$, cycloalkyle en $C_3$ à $C_6$, alcoxy en $C_1$ à $C_6$, halogénoalcoxy en $C_1$ à $C_6$, alcoxycarbonyle en $C_1$ à $C_6$, alkylthio en $C_1$ à $C_6$, alkylamino en $C_1$ à $C_6$, di-($C_1$-$C_6$)-alkylamino, alkylaminocarbonyle en $C_1$ à $C_6$, di-($C_1$-$C_6$)-alkylaminocarbonyle, alkylaminothiocarbonyle en $C_1$ à $C_6$, di-($C_1$-$C_6$)-alkylaminothiocarbonyle, alcényle en $C_2$ à $C_6$, alcényloxy en $C_2$ à $C_6$, cycloalkyle en $C_3$ à $C_6$, cycloalcényle en $C_3$ à $C_6$, phényle, phénoxy, phénylthio, benzyle, benzyloxy, hétérocyclyle à 5 ou 6 membres, hétaryle à 5 ou 6 membres, hétaryloxy à 5 ou 6 membres ou $C(R^{\alpha})=NOR^{\beta}$,

$R^{\alpha}$, $R^{\beta}$ représentant de l'hydrogène ou un radical alkyle en $C_1$ à $C_6$,

$R^1$ représentant de l'hydrogène ou un radical cyano, alkyle en $C_1$ à $C_4$, halogénoalkyle en $C_1$ à $C_4$, cycloalkyle en $C_3$ à $C_6$, alcoxy en $C_1$ à $C_4$,

$R^2$ représentant un radical phényle, phénylcarbonyle, phénylsulfonyle, hétaryle à 5 ou 6 membres, hétarylcarbonyle à 5 ou 6 membres ou hétarylsulfonyle à 5 ou 6 membres, les systèmes cycliques étant non substitués ou substitués par un à trois radicaux $R^a$, alkyle en $C_1$ à $C_{10}$, cycloalkyle en $C_3$ à $C_6$, alcényle en $C_2$ à $C_{10}$, alcynyle en $C_2$ à $C_{10}$, alkylcarbonyle en $C_1$ à $C_{10}$, alcénylcarbonyle en $C_2$ à $C_{10}$, alcynylcarbonyle en $C_3$ à $C_{10}$, alkylsulfonyle en $C_1$ à $C_{10}$, ou $C(R^{\alpha})=NOR^{\beta}$, les radicaux hydrocarbonés de ces groupes étant non substitués ou substitués par un à trois radicaux $R^c$,

$R^c$ représentant un radical cyano, nitro, amino, aminocarbonyle, aminothiocarbonyle, halogéno, alkyle en $C_1$ à $C_6$, halogénoalkyle en $C_1$ à $C_6$, alkylsulfonyle en $C_1$ à $C_6$, alkylsulfoxyle en $C_1$ à $C_6$, alcoxy en $C_1$ à $C_6$, halogénoalcoxy en $C_1$ à $C_6$, alcoxycarbonyle en $C_1$ à $C_6$, alkylthio en $C_1$ à $C_6$, alkylamino en $C_1$ à $C_6$, di-($C_1$-$C_6$)-alkylamino, ($C_1$-$C_6$)-alkylaminocarbonyle, di-($C_1$-$C_6$)-alkylaminocarbonyle, ($C_1$-$C_6$)-alkylaminothiocarbonyle, di-($C_1$-$C_6$)-alkylaminothiocarbonyle, alcényle en $C_2$ à $C_6$, alcényloxy en $C_2$ à $C_6$, cycloalkyle en $C_3$ à $C_6$, cycloalkyloxy en $C_3$ à $C_6$, hétérocyclyle à 5 ou 6 membres, hétérocyclyloxy à 5 ou 6 membres, benzyle, benzyloxy, phényle, phénoxy, phénylthio, hétaryle à 5 ou 6 membres, hétaryloxy à 5 ou 6 membres et hétarylthio, les groupes cycliques pouvant, de leur côté, être partiellement ou totalement halogénés ou porter de un à trois radicaux $R^a$, et

$R^3$ représentant de l'hydrogène,
un radical alkyle en $C_1$ à $C_6$, alcényle en $C_2$ à $C_6$, alcynyle en $C_2$ à $C_6$, les radicaux hydrocarbonés de ces groupes étant non substitués ou substitués par un à trois groupes $R^c$, qui peuvent le cas échéant être substitués par un à trois radicaux $R^a$.

**5.** Procédé suivant la revendication 4, dans lequel la strobilurine correspond à la formule Ia

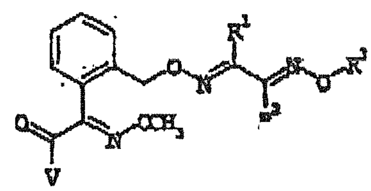

Ia

dans laquelle :

V représente un radical alkylamino en $C_1$ à $C_4$ ou alcoxy en $C_1$ à $C_4$,
$R^1$ représente de l'hydrogène, halogéno, cyano, halogénoalkyle en $C_1$ ou alkyle en $C_1$ à $C_4$,
$R^2$ représente un halogène ou un radical alkyle en $C_1$ à $C_4$, alcoxy en $C_1$ à $C_6$, alcényle en $C_1$ à $C_6$, halogénoalkyle en $C_1$ à $C_4$, phényle, halogénophényle,
$R^3$ représente de l'hydrogène ou un radical halogénoalkyle en $C_1$, alkyle en $C_1$ à $C_4$, cyclopropyle, alcényle en $C_3$ à $C_4$ ou alcynyle en $C_3$ à $C_4$.

**6.** Procédé suivant la revendication 4, dans lequel la strobilurine correspond à la formule Ib

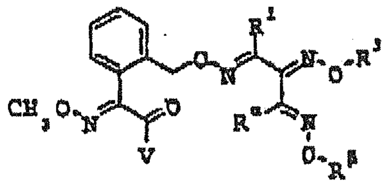

Ib

dans laquelle :

V représente $NHCH_3$ ou $OCH_3$,
$R^1$ représente de l'hydrogène ou un radical cyano, halogéno, halogénoalkyle en $C_1$ ou alkyle en $C_1$ à $C_4$,
$R^3$ représente de l'hydrogène ou un radical halogénoalkyle en $C_1$, cyclopropyle, alkyle en $C_1$ à $C_4$, alcényle en $C_3$ à $C_4$, alcynyle en $C_3$ à $C_4$,
$R^\alpha$ représente de l'hydrogène ou un radical halogénoalkyle en $C_1$ ou alkyle en $C_1$ à $C_4$,
$R^\beta$ représente de l'hydrogène ou un radical halogénoalkyle en $C_1$, cyclopropyle, alkyle en $C_1$ à $C_4$, alcényle en $C_3$ à $C_4$ ou alcynyle en $C_3$ à $C_4$.

**7.** Procédé suivant les revendications 1 à 6, **caractérisé en ce que** l'on utilise en tant que composant (b) une substance active pesticide choisie dans le groupe formé par l'imidacloprid, l'acétamipride, le nitenpyram, le fipronil, le carbofuran, le carbosulfan, le benfuracarbe, le thiaclopride, le fludioxonil, le tefuranitde, la thiaméthoxam, la (E)-1-(2-chlorothiazol-5-ylméthyl)-3-méthyl-2-nitroguanidine et la terafuranitdine.

**8.** Procédé suivant les revendications 1 à 7, **caractérisé en ce que** l'on utilise en tant que composant (e) du carbonate de calcium, du silicate de magnésium ou du sulfate de calcium.

**9.** Procédé de préparation d'une préparation solide d'un agent phytosanitaire suivant l'une quelconque des revendications 1 à 8, **caractérisé en ce que** l'on fait fondre les composants (a), (b), (c), (d), (e) et (f) dans une extrudeuse pour obtenir un mélange plastique et **en ce que** la masse fondue est ensuite morcelée par boudinage - granulation.

**10.** Préparation solide d'un agent phytosanitaire que l'on peut préparer suivant l'une quelconque des revendications 1 à 9.

**11.** Procédé de lutte contre des champignons phytopathogènes, des croissances de plantes indésirables, des attaques par des insectes ou des acariens indésirables et/ou de régulation de la croissance de plantes, **caractérisé en ce que** l'on fait agir une préparation d'un agent phytosanitaire suivant la revendication 10, sous forme solide, sur les plantes, sur leur habitat ou sur des semences.

**12.** Procédé suivant la revendication 11, **caractérisé en ce que** l'on applique une préparation solide d'un agent phytosanitaire suivant la revendication 10 en tant que granulés à épandre sur des sols qui sont en permanence ou temporairement recouverts d'eau.

FIG.1

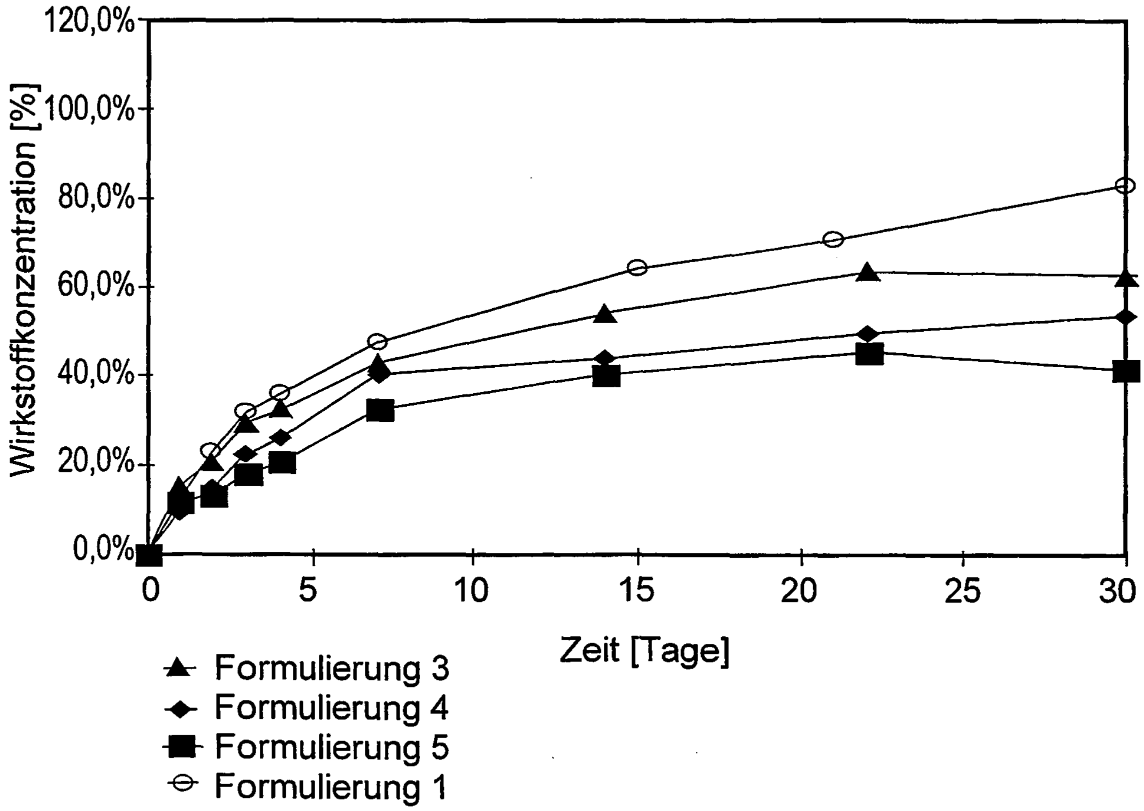
120,0%
100,0%
80,0%
60,0%
40,0%
20,0%
0,0%
Wirkstoffkonzentration [%]
0
5
10
15
20
25
30
Zeit [Tage]
Formulierung 3
Formulierung 4
Formulierung 5
Formulierung 1

FIG.2

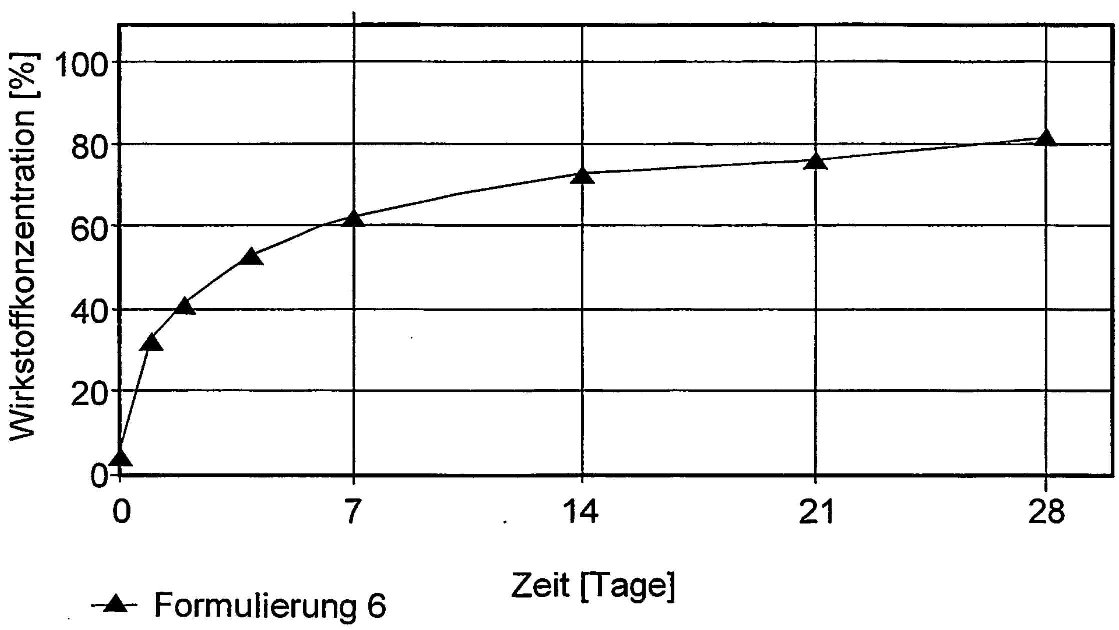
Wirkstoffkonzentration [%]
100
80
60
40
20
0
0
7
14
21
28
Zeit [Tage]
Formulierung 6

FIG.3

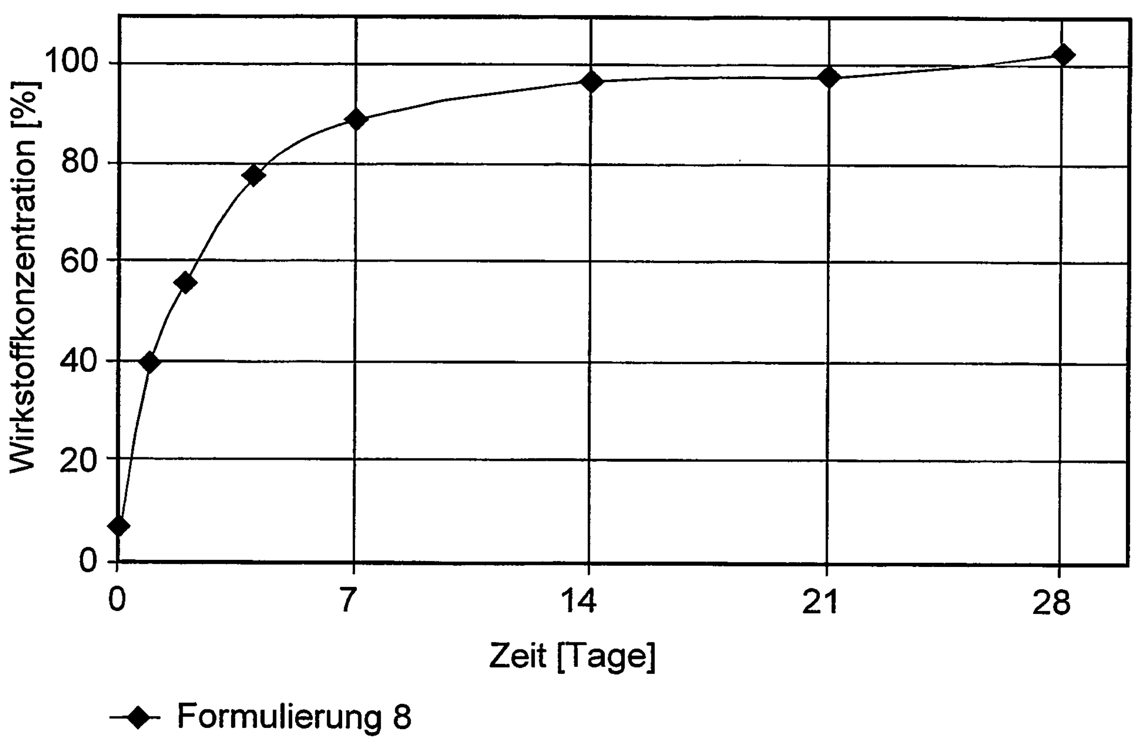
Wirkstoffkonzentration [%]
100
80
60
40
20
0
0
7
14
21
28
Zeit [Tage]
Formulierung 8

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9956540 A
- WO 9741836 A
- WO 9618591 A
- WO 9405484 A
- US 5310865 A
- US 5428126 A
- US 5440008 A
- US 5142023 A
- US 5247058 A
- US 5247059 A
- US 5484881 A
- WO 9809613 A
- US 4045418 A
- US 4057537 A
- WO 9715552 A
- DE 4440858 A
- DE 19504832 A
- EP 240904 A
- EP 337256 A
- EP 358195 A
- EP 240906 A
- DE 3830355 A